# EUROPÄISCHE PATENTSCHRIFT

(11) **EP 3 159 102 B1**
(45) Veröffentlichungstag und Bekanntmachung des Hinweises auf die Patenterteilung: **28.11.2018**
(21) Anmeldenummer: 16193207.4
(22) Anmeldetag: 11.10.2016
(51) Int. Cl.: B23Q 39/02

(54) **WERKZEUGMASCHINE MIT EINER STEUERUNGSEINRICHTUNG UND VERFAHREN FÜR EINE WERKZEUGMASCHINE**
MACHINE TOOL WITH A CONTROL DEVICE AND METHOD FOR A MACHINE TOOL
MACHINE-OUTIL AVEC DISPOSITIF DE COMMANDE ET PROCÉDÉ POUR MACHINE-OUTIL

(30) Priorität: 19.10.2015 DE 102015117771
(43) Veröffentlichungstag der Anmeldung: 26.04.2017
(73) Patentinhaber: Alfing Kessler Sondermaschinen GmbH, 73433 Aalen (DE)
(72) Erfinder: STAVE, Hinrich, 72622 Nürtingen (DE); BAUER, Alexander, 73434 Aalen (DE); GÖGGERLE, Markus, 73497 Tannhausen (DE); BAUMANN, Stefan, 73488 Ellenberg (DE); SCHWAB, Peter, 73431 Aalen (DE)
(74) Vertreter: Patentanwälte Bregenzer und Reule Partnerschaftsgesellschaft mbB

(56) Entgegenhaltungen:
- WO-A1-2015/124645
- DE-A1-102007 054 268
- DE-A1-102013 012 633
- DE-B3-102006 052 933

## Beschreibung

Die Erfindung betrifft eine Werkzeugmaschine mit einer Spindelanordnung und einem Werkstückträger, wobei die Spindelanordnung mindestens eine Werkzeugspindel zur Aufnahme eines Bearbeitungswerkzeugs aufweist, wobei der Werkstückträger mindestens zwei Werkstückhaltebereichen mit jeweils mindestens einem Werkstückhalter zum Halten eines Werkstücks aufweist, wobei der Werkstückträger und die mindestens eine Werkzeugspindel zur Bearbeitung mindestens eines an dem Werkstückträger gehaltenen Werkstücks anhand des Bearbeitungswerkzeugs entlang einer insbesondere horizontalen Bearbeitungsachse relativ zueinander verstellbar sind, wobei die Werkzeugmaschine eine Werkstückwechseleinrichtung zum Beladen des Werkstückträgers mit Werkstücken und Entladen des Werkstückträgers aufweist, und wobei die Werkzeugmaschine eine Verstelleinrichtung zum Verstellen der Werkstückhaltebereiche des Werkstückträgers zwischen einer der Spindelanordnung zugewandten Bearbeitungsposition zur Bearbeitung mindestens eines an dem jeweiligen Werkstückhaltebereich gehaltenen Werkstücks und einer der Werkstückwechseleinrichtung zugewandten Werkstückwechselposition zum Wechseln von Werkstücken durch die Werkstückwechseleinrichtung aufweist.

Eine derartige Werkzeugmaschine ist beispielsweise in DE 10 2007 054 268 A1 beschrieben. Der Werkstückträger kann nach oben vor die Spindelanordnung verfahren werden. Oberhalb der Spindelanordnung ist ein Werkstückwechsel vorgesehen, d.h. dass beispielsweise bearbeitete Werkstücke vom Werkstückträger entnommen und zur Bearbeitung anstehende Werkstücke an dem Werkstückträger angeordnet werden können. Während des Werkstückwechsels findet keine Werkstückbearbeitung statt. Der Funktionsumfang der bekannten Werkzeugmaschine ist eingeschränkt.

Aus WO 2015/124645 A1 geht ein hauptzeitparalleler Werkstückwechsel mit einem Roboter hervor.

Es ist daher die Aufgabe der vorliegenden Erfindung, eine Werkzeugmaschine mit höherer Effizienz bereitzustellen.

Zur Lösung der Aufgabe ist bei einer Werkzeugmaschine der eingangs genannten Art vorgesehen, dass sie eine Steuerungseinrichtung zum Ansteuern der Werkzeugmaschine derart aufweist, dass die Werkstückwechseleinrichtung während einer Bearbeitung von an einem Werkstückhaltebereich des Werkstückträgers gehaltenen Werkstücken durch die Spindelanordnung in einer ersten Bearbeitungsart an dem anderen Werkstückhaltebereich des Werkstückträgers gehaltene Werkstücke gleichzeitig austauscht und während einer Bearbeitung von an einem Werkstückhaltebereich gehaltenen Werkstücken in einer zweiten Bearbeitungsart, bei der die Spindelanordnung ein jeweiliges Werkstück mit einer gegenüber der ersten Bearbeitungsart höheren Anforderung an eine Ruhelage des Werkstückträgers bearbeitet, keine Werkstücke am Werkstückträger anordnet oder vom Werkstückträger entfernt.

Es ist dabei ein Grundgedanke, dass die Steuerungseinrichtung die Werkstückwechseleinrichtung so ansteuert, dass sie bei einer Werkstückbearbeitung mit höherer Präzision den Werkstückträger nicht berührt, auch nicht indirekt berührt, so dass beispielsweise keine Schwingungen, Erschütterungen oder dergleichen am Werkstückträger auftreten.

Die Werkstückbearbeitung in der zweiten Bearbeitungsart ist also nicht durch einen Werkstückwechsel gestört. Andererseits kann bei einer sozusagen unkritischen Bearbeitungsart, jedenfalls einer Bearbeitungsart mit weniger Risiko, dass die Werkstückbearbeitung nicht in ausreichender Präzision stattfindet, effektiv und schnell der Werkstückwechsel von statten gehen. In diesem Fall, nämlich bei der ersten Bearbeitungsart, ist der Werkstückwechsler oder die Werkstückwechseleinrichtung aktiv und tauscht Werkstücke aus. So können zum Beispiel bearbeitete Werkstücke durch die Werkstückwechseleinrichtung vom Werkstückträger entnommen und beispielsweise auf eine Fördereinrichtung abgelegt werden. Noch unbearbeitete Werkstücke können im Gegenzug von der Werkstückwechseleinrichtung am Werkstückträger angeordnet werden, d.h. dass der Werkstückträger beladen wird.

Während der zweiten Bearbeitungsart ist vorteilhaft vorgesehen, dass die Werkstückwechseleinrichtung möglichst nicht in Kontakt mit dem Werkstückträger gelangt. Die Formulierung "nicht in Kontakt mit dem Werkstückträger" sei so verstanden, dass die Werkstückwechseleinrichtung weder direkt in Kontakt mit dem Werkstückträger gelangt, noch indirekt, beispielsweise indem ein von der Werkstückwechseleinrichtung gehaltenes Werkstück an den Werkstückträger anstößt, diesen mit einer Kraft belastet oder dergleichen. Die Werkstückwechseleinrichtung kommt also weder direkt in Kontakt noch indirekt in Kontakt mit dem Werkstückträger während der Werkstückbearbeitung in der zweiten Bearbeitungsart.

Es ist vorteilhaft vorgesehen, dass die Steuerungseinrichtung zum Ansteuern der Werkzeugmaschine derart ausgestaltet ist, dass die Werkstückwechseleinrichtung während der Bearbeitung der Werkstücke in der zweiten Bearbeitungsart abseits des Werkstückträgers bewegt wird oder sich bewegt, insbesondere Handhabungsvorgänge zum Aufnehmen oder Ablegen von Werkstücken durchführt. Es ist zweckmäßig, wenn die Werkstückwechseleinrichtung während der zweiten Bearbeitungsart arbeitet, d.h. dass sie beispielsweise bereits vom Werkstückträger entnommene oder entladene Werkstücke auf einer Fördereinrichtung, zum Beispiel einem Förderband, ablegt und/oder noch zur Bearbeitung anstehende oder unbearbeitete Werkstücke von einer Fördereinrichtung oder aus einem Bereitstellungsraum aufnimmt und somit für die Anordnung dieser Werkstücke am Werkstückträger vorbereitet ist. Dadurch kann auch ein Zeitabschnitt effektiv genutzt werden, in welchem kein aktiver Werkstückwechsel am Werkstückträger stattfindet, jedoch durchaus eine Handhabung der Werkstücke abseits des Werkstückträgers.

Weiterhin ist es auch vorteilhaft, wenn während der Werkstückbearbeitung in der zweiten Bearbeitungsart der Werkstückträger auch an sich ruhig ist, das heißt dass die an dem Werkstückträger angeordneten Werkstückhalter unbewegt bleiben. Bei einem Werkstückhalter, der ein Werkstück in der Bearbeitungspositionen hält, sodass die Werkzeugspindel oder Werkzeugspindel an dem Werkstück arbeiten können, ist es in der Regel üblich, dass er eine Spannstellung beibehält. In Bezug auf mindestens einen Werkstückhalter, vorzugsweise alle Werkstückhalter, die abseits der Bearbeitungsposition oder außerhalb der Bearbeitungsposition sind, ist jedoch vorteilhaft, wenn sie ruhig stehen bleiben oder unbetätigt bleiben, auch wenn keine Werkstückbearbeitung von an ihnen angeordneten Werkstücken stattfindet. Zweckmäßigerweise ist vorgesehen, dass außerhalb der Bearbeitungsposition befindliche Werkstückhalter während einer Werkstückbearbeitung in der zweiten Bearbeitungsart nicht betätigt werden, insbesondere nicht in Richtung einer Anschlagposition und/oder einer ein Werkstück haltenden Spannstellung, betätigt werden und/oder nur während der Werkstückbearbeitung in der ersten Bearbeitungsart zwischen einer ein Werkstück haltenden Halteposition und einer ein Werkstück freigebenden Freigabeposition verstellt werden. Ein Werkstückhalter außerhalb der Bearbeitungsposition bleibt also beispielsweise gelöst. Der Werkstückhalter wird nicht beispielsweise in eine Spannstellung betätigt, wodurch gewisse Erschütterungen stattfinden könnten, die bei einer Werkstückbearbeitung in der zweiten Bearbeitungsart stören würden.

Anhand der Spindelanordnung kann das mindestens eine Werkstück bearbeitet werden, wobei die mindestens eine Werkzeugspindel zweckmäßigerweise entlang der ersten Bearbeitungsachse relativ zu dem mindestens einen Werkstück verstellbar ist. Die mindestens eine Werkzeugspindel ist beispielsweise anhand einer Linearführung relativ zu der Maschinenbasis oder einem Maschinenbett der Werkzeugmaschine gelagert.

Für die Werkstückbearbeitung in der ersten Bearbeitungsart oder der zweiten Bearbeitungsart können unterschiedliche Maßnahmen vorgesehen sein, beispielsweise unterschiedliche Werkzeugspindeln, unterschiedliche Bearbeitungswerkzeuge, die Nutzung der Bearbeitungswerkzeuge in unterschiedlichen Zonen, die unterschiedlichen Bearbeitungsarten zugeordnet sind, oder dergleichen mehr. Dies wird nachfolgend erläutert.

Eine vorteilhafte Ausführungsform der Erfindung sieht vor, dass die Spindelanordnung mindestens eine erste, der ersten Bearbeitungsart zugeordnete Werkzeugspindel und mindestens eine zweite, der zweiten Bearbeitungsart zugeordnete Werkzeugspindel aufweist. An den Werkzeugspindeln können beispielsweise unterschiedliche Bearbeitungswerkzeuge, zum Beispiel Bohrer mit unterschiedlichen Durchmessern oder dergleichen, vorgesehen sein.

Bevorzugt weist die Spindelanordnung eine Reihenanordnung mit jeweils mindestens zwei Werkzeugspindeln auf. Mit anderen Worten sind also zweckmäßigerweise mindestens zwei Werkzeugspindelreihen mit jeweils mindestens zwei Werkzeugspindeln an einem Spindelträger der Spindelanordnung vorgesehen.

Zweckmäßig ist insbesondere bei dieser Ausgestaltung der Erfindung die folgende Maßnahme: vorteilhaft ist vorgesehen, dass die mindestens erste Werkzeugspindel einen Bestandteil einer ersten Werkzeugspindelreihe mit mindestens zwei in einer Reihenrichtung nebeneinander angeordneten, der ersten Bearbeitungsart zugeordneten Werkzeugspindeln bildet und die mindestens eine zweite Werkzeugspindel einen Bestandteil einer zweiten Werkzeugspindelreihe mit mindestens zwei in einer Reihenrichtung nebeneinander angeordneten Werkzeugspindeln bildet, die der zweiten Bearbeitungsart zugeordnet sind. Es ist also beispielsweise möglich, dass eine erste Werkzeugspindelreihe sozusagen eine Vorbearbeitung oder grobe Bearbeitung der Werkstücke leistet, also in der ersten Bearbeitungsart arbeitet, während eine zweite Werkzeugspindelreihe der zweiten Bearbeitungsart zugeordnet ist und beispielsweise eine Feinbearbeitung durchführt. Die zweite Werkzeugspindelreihe weist beispielsweise eine Anordnung mehrerer Feinbohrspindeln auf, während die Vorbohrung oder grobe Bearbeitung durch sozusagen normale Motorspindeln geleistet wird.

Ganz allgemein ist zweckmäßigerweise bei der Werkzeugmaschine vorgesehen, dass die mindestens eine erste Werkzeugspindel eine der ersten Bearbeitungsart zugeordnete erste Lagerung und/oder einen der ersten Bearbeitungsart zugeordneten ersten Antrieb aufweist und die mindestens eine zweite Werkzeugspindel eine der zweiten Bearbeitungsart zugeordnete zweite Lagerung und/oder einen der zweiten Bearbeitungsart zugeordneten weiten Antrieb aufweist. Mithin ist es also vorteilhaft, wenn beispielsweise die der zweiten Bearbeitungsart zugeordnete zweite Werkzeugspindel eine etwas exaktere oder feinere Lagerung, beispielsweise eine hydrostatische Lagerung, aufweist als die erste Werkzeugspindel. Diese kann beispielsweise übliche Wälzlager aufweisen, die für die erste Bearbeitungsart ausreichen. Beispielsweise kann der Rundlauf der mindestens einen Werkzeugspindel für die zweite Bearbeitungsart genauer sein als ein Rundlauf der mindestens einen Werkzeugspindel für die erste Bearbeitungsart. Auch die Antriebskonzepte der ersten und zweiten Werkzeugspindel können sich voneinander unterscheiden. So kann beispielsweise für die zweite Bearbeitungsart ein Antriebsmotor mit Direktantrieb vorgesehen sein, während für die erste Bearbeitungsart ein Antriebsmotor mit Kraftübertragung anhand eines Getriebes auf die Werkzeugspindel ausreicht.

Zweckmäßigerweise ist vorgesehen, dass an der mindestens einen ersten, der ersten Bearbeitungsart zugeordneten Werkzeugspindel ein erstes Bearbeitungswerkzeug und der mindestens einen zweiten, der zweiten Bearbeitungsart zugeordneten Werkzeugspindel ein von dem ersten Bearbeitungswerkzeug verschiedenes zweites Bearbeitungswerkzeug angeordnet ist. Diese Ausgestaltung ist ohne weiteres auch dann möglich, wenn diese Werkzeugspindel nicht Bestandteile von Werkzeugspindelreihen bilden. Es ist möglich, dass sich die Rolle der ersten und der zweiten Werkzeugspindel während der Nutzung der Werkzeugmaschine ändern, nämlich indem beispielsweise ein der ersten Bearbeitungsart zugeordnetes Bearbeitungswerkzeug an der zweiten Werkzeugspindel und ein der zweiten Bearbeitungsart zugeordnetes Bearbeitungswerkzeug an der ersten Werkzeugspindel angeordnet wird. Dazu ist die später noch erläuterte Werkzeugwechseleinrichtung vorteilhaft einsetzbar.

Eine weitere Ausgestaltung sieht vor, dass an der mindestens einen Werkzeugspindel ein für die erste Bearbeitungsart und die zweite Bearbeitungsart geeignetes Bearbeitungswerkzeug angeordnet ist. Das Bearbeitungswerkzeug hat beispielsweise in Bezug auf seine Längserstreckung oder Längsachse voneinander verschiedene erste und zweite Bearbeitungsbereiche, die der ersten und zweiten Bearbeitungsart zugeordnet sind.

Während die Werkzeugspindel das Bearbeitungswerkzeug in der ersten Bearbeitungsart zur Werkstückbearbeitung nutzt, kann die Werkstückwechseleinrichtung Werkstücke wechseln, d.h. den Werkstückträger beladen bzw. entladen. Während der zweiten Bearbeitungsart hingegen unterbleibt der Werkstückwechsel. Beispielsweise hat das Bearbeitungswerkzeug in Längsrichtung oder in Richtung der Bearbeitungsachse hintereinander angeordnete Schneidenanordnungen, von denen eine erste Schneidenanordnung für eine spanende Bearbeitung eines Werkstücks mit geringer Präzision entsprechend der ersten Bearbeitungsart, beispielsweise für ein Vorbohren, und eine zweite Schneidenanordnung für eine spanende Bearbeitung des Werkstücks mit höherer Präzision entsprechend der zweiten Bearbeitungsart ausgestaltet oder vorgesehen ist. Somit können also beispielsweise während der ersten Bearbeitungsphase das Bearbeitungswerkzeug und das Werkstück über einen ersten Bewegungsabschnitt relativ zueinander hin bewegt werden, wobei während dieser Bearbeitungsphase das Werkstück in der ersten Bearbeitungsart durch das Bearbeitungswerkzeug bereits bearbeitet wird, insbesondere vorbearbeitet wird. Gleichzeitig kann die Werkstückwechseleinrichtung dabei noch Werkstücke wechseln, also am Werkstückträger anordnen oder vom Werkstückträger abnehmen. In einer zweiten Bearbeitungsphase hingegen werden das Bearbeitungswerkzeug und das Werkstück über einen zweiten Bewegungsabschnitt relativ zueinander hin bewegt, wobei in dieser zweiten Bearbeitungsphase das Werkstück in der zweiten Bearbeitungsart, also mit höherer Präzision jedenfalls höherer Empfindlichkeit gegenüber Erschütterungen während dieses Bearbeitungsvorgangs, bearbeitet wird. In dieser zweiten Bearbeitungsphase ordnet die Werkstückwechseleinrichtung keine Werkstücke am Werkstückträger an oder nimmt Werkstücke vom Werkstückträger. Dadurch sind Erschütterungen während dieser sozusagen empfindlichen Werkstückbearbeitung nicht zu befürchten.

Es ist vorteilhaft, dass die mindestens eine der ersten Bearbeitungsart zugeordnete erste Werkzeugspindel und die mindestens eine der zweiten Bearbeitungsart zugeordnete zweite Werkzeugspindel an einem gemeinsamen Spindelträger angeordnet sind. Somit können diese Werkzeugspindeln beispielsweise an einem gemeinsamen Schlitten entlang der Bearbeitungsachse bewegbar gelagert sein. Es ist auch möglich, dass die mindestens eine Werkzeugspindel relativ zu dem Spindelträger beweglich ist, beispielsweise entlang der Bearbeitungsachse. So ist beispielsweise ein Schlitten denkbar oder möglich, der quer zur Bearbeitungsachse beweglich an einem Maschinenbett gelagert ist, wofür zweckmäßigerweise auch ein Schlittenantrieb vorgesehen ist, während die Werkzeugspindel relativ zu dem Schlitten oder Spindelträger entlang der Bearbeitungsachse, insbesondere individuell und jeweils einzelnen, beweglich sind. Auch eine kumulierte Bewegung ist möglich, d.h. dass beispielsweise der Spindelträger entlang der Bearbeitungsachse beweglich ist und die Werkzeugspindel oder jedenfalls mindestens eine davon relativ zum Spindelträger entlang der Bearbeitungsachse beweglich ist.

Eine vorteilhafte Ausführungsform der Erfindung sieht vor, dass die Werkzeugmaschine einen Werkzeugwechsel, insbesondere einen automatischen Werkzeugwechsler, zum Wechseln von Bearbeitungswerkzeugen aufweist. So ist es beispielsweise möglich, dass eine Werkzeugspindel sozusagen umgerüstet wird, indem nämlich ein für die erste Bearbeitungsart geeignetes Bearbeitungswerkzeug gegen ein für die zweite Bearbeitungsart geeignetes Werkzeug ausgetauscht wird.

Bei der Werkzeugwechseleinrichtung und der Werkstückwechseleinrichtung sind verschiedene Ausgestaltungen möglich. Eine derartige Einrichtung kann beispielsweise einen Handlingroboter umfassen. Es ist aber auch möglich, dass ein Förderband, ein Kettenmagazin oder dergleichen als Werkstückwechsler oder Werkzeugwechsler vorgesehen sind oder einen Bestandteil einer derartigen Einrichtung bilden.

Bevorzugt ist es, wenn der Werkstückträger um eine Positionier-Schwenkachse schwenkbar gelagert ist. Beispielsweise ist die Positionier-Schwenkachse gleichzeitig die Längsachse des Werkstückträgers oder eines Werkstückbalkens.

Eine bevorzugte Ausführungsform der Erfindung sieht vor, dass die Verstelleinrichtung ein Schwenklager und einen Schwenkantrieb zum Schwenken des Werkstückträgers um eine Positionier-Schwenkachse aufweist. Somit können abwechselnd verschiedene Werkstückhaltebereiche, beispielsweise zwei Werkstückhaltebereiche, zwischen der Werkstückwechselposition und der Bearbeitungsposition verschwenkt werden. Die Schwenkachse verläuft vorzugsweise quer zur Bearbeitungsachse. Die Schwenkachse ist vorzugsweise eine horizontale Achse. Es ist denkbar, dass die Schwenkachse auch eine vertikale Achse ist, sodass der Werkstückträger in diesem Fall beispielsweise aufrecht steht und um eine vertikale Schwenkachse geschwenkt wird.

Insbesondere vorteilhaft ist es, wenn die Schwenkachse gleichzeitig eine Längsachse des Werkstückträgers darstellt, die vorzugsweise eine Längserstreckung aufweist. Insbesondere ist der Werkstückträger in der Art eines Balkens ausgestaltet.

Es ist aber auch möglich, dass der Werkstückträger nicht geschwenkt wird oder nicht nur geschwenkt wird, sodass die Verstelleinrichtung beispielsweise eine Linearführung zum linearen Verstellen des Werkstückträgers aufweist oder umfasst. Es ist also möglich, dass der Werkstückträger nur linear oder anhand der Linearführung zwischen der Werkstückwechselposition und der Bearbeitungsposition bewegt wird. Weiterhin ist es möglich, dass der Werkstückträger nicht nur linear bewegt wird, sondern zudem auch geschwenkt. Die Bewegung der Linearführung verläuft zweckmäßigerweise entlang einer vertikal verlaufenden oder parallel zu einer vertikal verlaufenden Stellachse. Die Stellachse verläuft zweckmäßigerweise quer zur bereits erwähnten Schwenkachse.

Vorteilhaft ist vorgesehen, dass der Werkstückträger quer zu der Bearbeitungsachse entlang einer Stellachse anhand einer Werkstückträger-Linearführung relativ zu der Spindelanordnung verstellbar gelagert ist. Somit kann also der Werkstückträger beispielsweise linear nach oben oder unten relativ zu der Spindelanordnung verstellbar sein.

Eine vorteilhafte Ausgestaltung sieht vor, dass neben der Spindelanordnung und dem Werkstückträger eine Funktionsbaugruppe zur Ausführung mindestens einer Funktion an einem an dem mindestens einen Werkstückhalter angeordneten Werkstück angeordnet ist und der Werkstückträger zur Positionierung des mindestens einen Werkstückhalters relativ zu der Funktionsbaugruppe entlang der eine zweite Bearbeitungsachse bildenden Stellachse der Werkstückträger-Linearführung verstellbar ist.

Die Werkstücke bleiben oder das mindestens eine Werkstück bleibt vorteilhaft am Werkstückträger, während die Funktionsbaugruppe die mindestens eine Funktion an dem mindestens einen Werkstück oder den Werkstücken ausführt. Die mindestens eine Funktion kann beispielsweise eine Werkstückbearbeitung vorsehen, zum Beispiel anhand einer Werkzeugspindel der Funktionsbaugruppe oder eines Bearbeitungswerkzeugs. Die mindestens eine Funktion kann aber auch eine Zentrierfunktion und/oder Prüffunktion und/oder Messfunktion sein.

Beispielsweise bleibt das mindestens eine Werkstück an dem Werkstückhalter ortsfest gehalten, insbesondere gespannt. Es ist aber auch möglich, dass der Werkstückhalter das Werkstück um ein gewisses Maß freigibt, sodass die Funktionsbaugruppe beispielsweise das Werkstück relativ zum Werkstückhalter zentrieren oder positionieren kann.

Eine zweckmäßige Ausgestaltung der Erfindung sieht vor, dass die mindestens eine Funktionsbaugruppe mindestens eine Werkzeugspindel umfasst. An der Werkzeugspindel kann ein Bearbeitungswerkzeug angeordnet sein, beispielsweise ein Bohrkopf, Fräskopf oder dergleichen. Der Werkstückträger verstellt das mindestens eine Werkstück entlang der zweiten Bearbeitungsachse zu der mindestens einen Werkzeugspindel der Funktionsbaugruppe und deren Bearbeitungswerkzeug hin, so dass beispielsweise der Vorschub in Bearbeitungsrichtung durch den Werkstückträger geleistet wird. Die mindestens eine Werkzeugspindel der Funktionsbaugruppe dient beispielsweise einer Vorbearbeitung von Werkstücken oder gröberen Bearbeitung von Werkstücken oder ist der ersten Bearbeitungsart zugeordnet.

Die mindestens eine Werkzeugspindel der Funktionsbaugruppe ist beispielsweise ortsfest bezüglich einer Maschinenbasis an einem Baugruppenträger der Funktionsbaugruppe angeordnet. Die Verstellarbeit bzw. der Werkstückvorschub wird also sozusagen von dem Werkstückträger geleistet, während die mindestens eine Werkzeugspindel der Funktionsbaugruppe ortsfest bezüglich der Maschinenbasis bleibt.

Es ist aber auch möglich, dass die mindestens eine Werkzeugspindel der Funktionsbaugruppe beweglich, insbesondere linear entlang oder parallel zu der ersten Bearbeitungsachse und/oder der zweiten Bearbeitungsachse beweglich, an dem Baugruppenträger anhand einer ersten oder zweiten Linearführung gelagert ist. Es ist also möglich, dass die mindestens eine Werkzeugspindel beispielsweise quer zu der Werkstückträger-Linearführung bzw. deren Stellachse an dem Baugruppenträger linear geführt ist.

Die Spindelanordnung kann beispielsweise mindestens einen Werkzeugrevolver umfassen oder aufweisen. Der Werkzeugrevolver weist einen um eine Revolverachse drehbaren Werkzeugträger zur Positionierung jeweils eines Bearbeitungswerkzeugs in eine Bearbeitungsposition und einen Werkzeugantrieb zum Dreh-Antreiben des in der Bearbeitungsposition befindlichen Bearbeitungswerkzeugs auf.

Bevorzugt ist die Werkzeugmaschine eine Mehrspindel-Bearbeitungsmaschine oder Mehrspindelmaschine.

Bevorzugt ist eine Reihenanordnung mit mindestens zwei Werkzeugspindeln der Spindelanordnung und/oder der Nebenspindelanordnung der Funktionsbaugruppe. Zweckmäßigerweise sind drei oder weitere Werkzeugspindeln der Spindelanordnung und/oder der Nebenspindelanordnung der Funktionsbaugruppe in einer Reihenrichtung oder entlang einer Reihenachse nebeneinander angeordnet.

Die Reihenachse der Werkzeugspindeln der Spindelanordnung oder der Funktionsbaugruppe entspricht zweckmäßigerweise einer Reihenachse, entlang derer Werkstückhalter an dem Werkstückträger angeordnet sind. Somit können gleichzeitig mehrere an den Werkstückhaltern gehaltene Werkstücke mit den Bearbeitungswerkzeugen der Werkzeugspindeln der Funktionsbaugruppe bearbeitet werden.

Es ist nämlich vorteilhaft vorgesehen, dass an dem Werkstückträger mindestens zwei, vorzugsweise drei oder weitere, in einer Reihenrichtung nebeneinander angeordnete Werkstückhalter angeordnet sind. Diese mehreren Werkstückhalter ermöglichen es, dass mehrere Werkstücke gleichzeitig durch die Bearbeitungswerkzeuge der Funktionsbaugruppe und/oder durch Bearbeitungswerkzeuge der mindestens einen Werkzeugspindel der Spindelanordnung, die entlang der ersten Bearbeitungsachse verstellbar ist, bearbeitbar sind.

Die Funktionsbaugruppe kann aber auch einen Bestandteil der Werkstückwechseleinrichtung sein oder eine Komponente der Werkstückwechseleinrichtung halten. Insgesamt kann auch die Werkstückwechseleinrichtung durch die Funktionsbaugruppe gebildet sein oder daran angeordnet sein. Wenn die Funktionsbaugruppe beispielsweise oberhalb des Werkstückträgers angeordnet ist, kann sie beispielsweise eine Entladeeinrichtung zum Entladen des Werkstückträgers und/oder eine Beladeeinrichtung zum Beladen des Werkstückträgers mit Werkstücken bilden oder tragen.

Der Werkstückhalter kann selbstverständlich zusätzlich zu den beiden Werkstückhaltebereichen mindestens ein dritter Werkstückhaltebereich aufweisen, der in einer Position zwischen der Bearbeitungsposition und der Werkstückwechselposition anordenbar ist. Beispielsweise ist der Werkstückhalter in Seitenansicht polygonal, insbesondere dreieckförmig oder rechteckförmig, wobei an jeder der Flachseiten des Außenumfangs jeweils ein Werkstückhaltebereich vorgesehen ist.

Vorteilhaft ist vorgesehen, dass die Werkstückwechseleinrichtung und die Spindelanordnung an einander entgegengesetzten Seiten des Werkstückträgers angeordnet sind. Der Werkstückträger schwenkt also beispielsweise um 180°, um die Werkstückhalter in die Bearbeitungsposition oder die Werkstückwechselposition zu schwenken.

Weiterhin ist es aber auch möglich, dass der Werkstückträger wie schon erwähnt weitere Werkstückhaltebereiche aufweisen kann, so dass unterschiedliche Bereiche des Werkstückträgers für unterschiedliche Funktionen bereitstehen. Beispielsweise hat die Werkstückwechseleinrichtung eine Beladeeinrichtung und eine Entladeeinrichtung, wobei die Beladeeinrichtung zum Beladen des Werkstückträgers mit Werkstücken und die Entladeeinrichtung zum Entladen des Werkstückträgers, d.h. zum Entfernen der Werkstücke vom Werkstückträger, vorgesehen sind. Die Beladeeinrichtung und die Entladeeinrichtung sind zweckmäßigerweise an zueinander winkeligen Seiten des Werkstückträgers angeordnet. So ist es beispielsweise möglich, dass die Entladeeinrichtung an einer Oberseite des Werkstückträgers angeordnet ist, während die Beladeeinrichtung der Spindelbaugruppe gegenüberliegend auf der anderen Seite des Werkstückträgers angeordnet ist. Selbstverständlich können die Beladeeinrichtung und Entladeeinrichtung auch an anderen Stellen oder in umgekehrter Anordnung vorgesehen und angeordnet sein, beispielsweise die Beladeeinrichtung an der Oberseite des Werkstückträgers und die Entladeeinrichtung an einer weiter unten liegenden Partie des Werkstückträgers.

Zweckmäßigerweise ist vorgesehen, dass die Werkzeugmaschine mehrere, zum Beispiel mindestens zwei, entlang der Haupt-Bearbeitungsachse oder der ersten Bearbeitungsachse verstellbare Werkzeugspindeln aufweist. Die Werkzeugspindeln sind zweckmäßigerweise in einer Reihenrichtung nebeneinander angeordnet. Die Reihenrichtung oder Reihenachse entspricht zweckmäßigerweise der Reihenachse, entlang derer die Werkstückhalter an dem Werkstückträger vorteilhaft angeordnet sind. Somit können mehrere dieser in der Haupt-Bearbeitungsachse oder ersten Bearbeitungsachse verstellbaren Werkzeugspindeln am Werkstückträger angeordnete Werkstücke gleichzeitig bearbeiten.

Eine vorteilhafte Ausgestaltung sieht vor, dass die mindestens eine Werkzeugspindel oder die Werkzeugspindeln, die der ersten Bearbeitungsachse oder der Bearbeitungsachse der Spindelanordnung zugeordnet ist oder sind, an einem Werkzeugschlitten ortsfest angeordnet ist oder sind. Der Werkzeugschlitten ist beispielsweise an einer Linearführung an einer Maschinenbasis oder einem Maschinenbett der Werkzeugmaschine linear entlang der Haupt-Bearbeitungsachse oder ersten Bearbeitungsachse gelagert. Der Werkzeugschlitten kann als Ganzes mehrere, also zum Beispiel mindestens zwei, Werkzeugspindeln Richtung des Werkstückträgers oder der Werkstücke entlang der Haupt-Bearbeitungsachse oder ersten Bearbeitungsachse verstellen.

Bevorzugt ist es, wenn die Werkzeugspindeln, die der ersten Bearbeitungsachse zugeordnet sind, eine erste Werkzeugspindelreihe und eine zweite Werkzeugspindelreihe mit mindestens zwei in einer Reihenrichtung nebeneinander angeordneten Werkzeugspindeln bilden.

Der Werkstückträger ist zweckmäßigerweise anhand der Werkstückträger-Linearführung zur Positionierung des mindestens einen Werkstücks, vorzugsweise mindestens zweier Werkstücke, relativ zu der ersten Werkzeugspindelreihe und der zweiten Werkzeugspindelreihe ausgestaltet. Beispielsweise kann der Werkstückträger relativ zu den Werkstückspindelreihen vertikal auf und ab entlang der Stellachse verstellt werden. Somit können also beispielsweise die an dem Werkstückträger in einer Reihenrichtung nebeneinander angeordneten Werkstücke zunächst durch die Bearbeitungswerkzeuge der Werkzeugspindeln der ersten Werkzeugspindelreihe und danach durch die Bearbeitungswerkzeuge der Werkzeugspindeln der zweiten Werkzeugspindelreihe bearbeitet werden. Eine Werkzeugspindelreihe ist also dabei aktiv, während die andere Werkzeugspindelreihe sozusagen inaktiv ist. Bei der inaktiven Werkzeugspindelreihe kann ein Werkzeugwechsel durchgeführt werden.

Eine Spindelachse der mindestens einen Werkzeugspindel oder Spindelachsen aller Werkzeugspindeln der Spindelanordnung verlaufen zweckmäßigerweise parallel zu der ersten Bearbeitungsachse.

Eine Spindelachse oder die Spindelachsen der Werkzeugspindeln der Funktionsbaugruppe verlaufen zweckmäßigerweise parallel zu der zweiten Bearbeitungsachse.

Die Funktionsbaugruppe kann alternativ oder in Ergänzung zu der mindestens einen Werkzeugspindel andere Komponenten enthalten. Beispielsweise ist es vorteilhaft, wenn die Funktionsbaugruppe mindestens eine Prüfeinrichtung zum Prüfen und/oder zum Messen des an dem mindestens einen Werkstückhalter angeordneten Werkstücks aufweist. Somit kann beispielsweise der Werkstückhalter bei seiner Verstellung entlang seiner Stellachse oder der zweiten Bearbeitungsachse das Werkstück in Richtung der Prüfeinrichtung oder Messeinrichtung verstellen. Die Messeinrichtung oder Prüfeinrichtung als solche muss also nicht zu dem Werkstück hin verstellt werden, was eine bauliche Vereinfachung darstellen kann.

Es ist aber auch möglich, dass die Funktionsbaugruppe mindestens eine Zentriereinrichtung zum Zentrieren des an dem mindestens einen Werkstückhalter angeordneten Werkstücks umfasst. Der Werkstückhalter kann also beispielsweise um ein gewisses Maß geöffnet werden oder die Spannung herabgesetzt werden derart, dass das Werkstück zwar noch am Werkstückhalter gehalten ist, gleichzeitig aber die Zentriereinrichtung das Werkstück relativ zum Werkstückhalter zentriert.

Ohne weiteres ist es möglich, dass die Funktionsbaugruppe mehrere Messeinrichtungen oder Prüfeinrichtungen und/oder mehrere Zentriereinrichtungen umfasst. Vorzugsweise ist dabei vorgesehen, dass die Zentriereinrichtungen oder Messeinrichtungen oder Prüfeinrichtungen einer Reihenrichtung nebeneinander angeordnet sind.

Vorteilhaft ist vorgesehen, dass die erste Bearbeitungsachse oder die Bearbeitungsachse der mindestens einen Werkzeugspindel und die zweite Bearbeitungsachse zueinander orthogonal bzw. rechtwinkelig sind. Denkbar ist aber auch eine schräge Anordnung mit einem Winkel von mehr oder weniger als 90° zwischen der ersten und der zweiten Bearbeitungsachse.

Zweckmäßigerweise ist die erste Bearbeitungsachse oder die Bearbeitungsachse der mindestens einen Werkzeugspindel eine horizontale Bearbeitungsachse, beispielsweise eine sogenannte Z-Achse man könnte diese erste Bearbeitungsachse auch als eine Z1-Achse bezeichnen.

Die zweite Bearbeitungsachse ist zweckmäßigerweise eine vertikale Bearbeitungsachse oder vertikalen Stellachse, beispielsweise eine Y-Achse oder Z2-Achse.

Eine bevorzugte Ausgestaltung der Erfindung sieht vor, dass die Funktionsbaugruppe oberhalb der Werkstückträger-Linearführung oder Werkstückträger-Linearführungen oder des Werkstückträgers angeordnet ist. Somit wird der Bauraum oberhalb des Werkstückträgers für die Funktionsbaugruppe genutzt.

Eine zweckmäßige Ausgestaltung der Erfindung sieht vor, dass die Funktionsbaugruppe einen Baugruppenträger aufweist, der ortsfest an einer Maschinenbasis der Werkzeugmaschine angeordnet ist. Somit werden also die Werkstücke relativ zu dem ortsfesten Baugruppenträger anhand des Werkstückträgers verstellt. Ein derartiger Baugruppenträger ist vorzugsweise als ein Portal ausgestaltet oder an einem Portal angeordnet.

Zweckmäßigerweise ist vorgesehen, dass die Werkstückträger-Linearführung an mindestens einer Stütze zum Stützen der Funktionsbaugruppe angeordnet ist. Beispielsweise sind die vorgenannten beiden Stützen, an denen der Baugruppenträger der Funktionsbaugruppe abgestützt ist, gleichzeitig die Basen für die Werkstückträger-Linearführung. An jeder dieser Stützen ist beispielsweise mindestens eine Führungsschiene der Linearführung angeordnet. Beispielsweise erstreckt sich der Werkstückträger zwischen den Stützen.

Zweckmäßigerweise ist vorgesehen, dass der Werkstückträger als ein Werkstückbalken ausgestaltet ist. Eine Längsachse des Werkstückbalkens oder des Werkstückträgers definiert vorzugsweise eine Reihenachse oder ist parallel zu einer Reihenachse, entlang derer die Werkstückhalter am Werkstückträger zum Halten mehrerer Werkstücke angeordnet sind.

Weitere Bewegungsfreiheitsgrade sind ohne weiteres möglich. Zweckmäßigerweise ist beispielsweise vorgesehen, dass die mindestens eine entlang der Haupt-Bearbeitungsachse oder ersten Bearbeitungsachse verstellbaren Werkzeugspindel und/oder der Werkstückträger und/oder die Funktionsbaugruppe quer zu der ersten Bearbeitungsachse und der zweiten Bearbeitungsachse beweglich gelagert ist. Beispielsweise können eine oder mehrere dieser Komponenten entlang einer sogenannten X-Achse oder einer horizontalen Achse beweglich gelagert sein.

Beispielsweise kann die mindestens eine Werkzeugspindel, die entlang der ersten Bearbeitungsachse beweglich an einer Maschinenbasis oder einem Maschinenbett der Werkzeugmaschine beweglich gelagert ist, anhand eines Kreuzschlittens sowohl in Richtung der ersten Bearbeitungsachse als auch quer dazu, insbesondere horizontal quer dazu, beweglich gelagert sein.

Weiterhin ist es möglich, dass beispielsweise der Werkstückträger ebenfalls entlang einer X-Achse oder parallel zu einer X-Achse oder horizontalen Achse beweglich gelagert ist. Somit kann der Werkstückträger quer zu der in der Haupt-Bearbeitungsachse oder ersten Bearbeitungsachse beweglichen mindestens einen Werkzeugspindel der Spindelanordnung verstellt werden.

Es versteht sich, dass eine jeweiligen Linearführung zweckmäßigerweise ein Antrieb zugeordnet ist, d.h. dass beispielsweise ein Werkzeugschlitten für die Spindelanordnung anhand eines Antriebs entlang der ersten Bearbeitungsachse oder Z-Achse verstellbar ist. Auch der Werkstückträger-Linearführung ist zweckmäßigerweise ein Antrieb zugeordnet, beispielsweise ein Schlittenantrieb. Insoweit Drehantriebe notwendig sind, beispielsweise zum Drehen oder schwenken des Werkstückträgers um die Positionier-Schwenkachse, ist hierfür mindestens ein motorischer Drehantrieb, beispielsweise ein Elektromotor, vorgesehen.

Nachfolgend werden Ausführungsbeispiele der Erfindung anhand der Zeichnung erläutert. Es zeigen:
- Figur 1: eine perspektivische Schrägansicht einer Werkzeugmaschine von schräg oben, die in
- Figur 2: von schräg unten vorn dargestellt ist,
- Figur 3: Werkzeugmaschine gemäß Figuren 1 und 2 von schräg vorn,
- Figur 4: eine Seitenansicht der Werkzeugmaschine,
- Figur 5: eine Variante der Werkzeugmaschine gemäß vorstehender Figuren mit einem Werkzeugrevolver,
- Figur 6: ein schematisch dargestelltes Bearbeitungswerkzeug mit für unterschiedliche Bearbeitungsarten ausgebildeten Bearbeitungsbereichen.

Eine Werkzeugmaschine 10 weist eine Maschinenbasis 11 auf. Die Maschinenbasis 11 umfasst einen Werkzeugabschnitt 12 und einen Werkstückabschnitt 13, die beispielsweise winkelig zueinander angeordnet sind. In Draufsicht ist die Maschinenbasis 11, die man auch als Maschinenbett bezeichnen könnte, beispielsweise T-förmig, was aber nicht einschränkend verstanden werden soll. Der Werkzeugabschnitt 12 und der Werkstückabschnitt 13 können einstückig sein oder fest miteinander verbunden sein.

An dem Werkzeugabschnitt 12 ist ein Werkzeugschlitten 20 zumindest entlang einer Bearbeitungsachse Z1, die nachfolgend auch als Z1-Achse bezeichnet wird, linear gelagert. Hierfür ist eine Linearführung 21 vorgesehen, die beispielsweise auf einer Oberseite des Werkzeugabschnitts 12 vorgesehen ist. Die Linearführung 21, die man auch als Z1-Führung bezeichnen könnte, umfasst beispielsweise Führungsschienen 22, an denen der Werkzeugschlitten 20 beweglich gelagert ist.

Beispielsweise ist ein Schlittenträger 26, der eine Schlittenbasis 27 des Werkzeugschlittens 20 trägt, an den Führungsschienen 22 beweglich gelagert, beispielsweise mit Rollen, Gleitstücken oder dergleichen.

Ein Schlittenantrieb 23 dient zum Antreiben des Werkzeugschlittens 20 entlang der Z1-Achse. Der Schlittenantrieb 23 umfasst beispielsweise einen Antriebsmotor 24 sowie einen Spindeltrieb 25, der mit dem Werkzeugschlitten 20, beispielsweise dem Schlittenträger 26, gekoppelt ist.

Eine Ausführungsform der Erfindung kann vorsehen, dass der Werkzeugschlitten 20 nur entlang der Z1-Achse beweglich gelagert ist. In diesem Falle wäre beispielsweise die Schlittenbasis 27 mit dem Schlittenträger 26 einstückig oder mit dem Schlittenträger 26 fest verbunden.

Vorliegend ist jedoch ein weiterer Bewegungsfreiheitsgrad vorhanden, nämlich in einer zu der Bearbeitungsachse Z1 winkelig, beispielsweise rechtwinkelig, verlaufenden Werkzeug-Stellachse X. An dem Schlittenträger 26 ist eine weitere Linearführung 28 mit beispielsweise Schienen 29 vorgesehen, an der die Schlittenbasis 27 entlang der Werkzeug-Stellachse X beweglich gelagert ist. Beispielsweise sind Gleitflächen, Rollen oder dergleichen andere Führungselemente 30 an den Schienen 29 beweglich gelagert. Ein Schlittenantrieb 30, der nur schematisch dargestellt ist, treibt die Schlittenbasis 27 relativ zum Schlittenträger 26 entlang der Werkzeug-Stellachse X an. Der Werkzeugschlitten 20 ist beispielsweise ein sogenannter Kreuzschlitten.

An dem Werkzeugschlitten 20 ist eine Spindelanordnung 40 mit mehreren Werkzeugspindeln 41 vorgesehen. Ohne weiteres könnte selbstverständlich auch nur eine einzige Werkzeugspindel an dem Werkzeugschlitten 20 angeordnet sein.

Die Werkzeugspindeln 41 sind beispielsweise in einer oberen Werkzeugspindelreihe 42 und in einer unteren Werkzeugspindelreihe 43 in Reihenrichtung nebeneinander übereinander angeordnet. An einer Frontseite 31 des Werkzeugschlittens 20 sind beispielsweise Bearbeitungswerkzeuge 44 an den Werkzeugspindeln 41 angeordnet. Entgegengesetzt zu der Frontseite 31, also an einer Rückseite, stehen beispielsweise Spindelantriebe 45 der Werkzeugspindeln 41 nach hinten vor den Werkzeugschlitten 20, insbesondere die Schlittenbasis 27, vor.

Frontal vor dem Werkzeugschlitten 20 ist ein Werkstückträger 60 angeordnet. Der Werkstückträger 60 umfasst beispielsweise einen Werkstückbalken 61, der quer vor dem Werkzeugschlitten 20 verläuft. An dem Werkstückträger 60 sind mehrere Werkstückhalter 62 zum Halten von Werkstücken W, beispielsweise Pleueln, in einer Reihenrichtung 63 nebeneinander angeordnet. Die Reihenrichtung 63 verläuft parallel zu einer Längsachse 64 des Werkstückträgers 60.

Der Werkstückträger 60 ist um eine Positionier-Schwenkachse A, vorliegend seine Längsachse 64, schwenkbar gelagert, sodass an unterschiedlichen Werkstückhaltebereichen 65, z.B. Werkstückhaltebereichen 65A und 65B, gehaltene Werkstücke W jeweils frontal vor den Werkzeugschlitten 20 und somit vor die Bearbeitungswerkzeuge 44 in einen Bearbeitungsbereich 85 zur Bearbeitung schwenkbar sind oder auch von den Bearbeitungswerkzeugen 44 weg, beispielsweise in einen für einen Werkstückwechsel vorgesehenen Werkstückwechselbereich 86. Der Werkstückwechselbereich 86 und der Bearbeitungsbereich 85 sind vorteilhaft an einander entgegengesetzten Seiten des Werkstückträgers 60 vorgesehen.

Die Werkstückhaltebereiche 65A und 65B können abwechselnd zwischen einer Werkstückwechselposition 286 und einer Bearbeitungsposition 285 anhand der Verstelleinrichtung 78 verstellt werden.

Die in dem Bearbeitungsbereich 85 befindlichen Werkstücke W oder Werkstückhalter 42 befinden sich in der Bearbeitungsposition 285, während die in dem Werkstückwechselbereich 86 jeweils temporär angeordneten Werkstückhalter 42 oder Werkstücke W in der Werkstückwechselposition 286 sind.

Die Werkstückhaltebereiche 65 sind an Außenumfangsseiten, insbesondere einander entgegengesetzten und/oder zueinander winkeligen, Außenumfangsseiten des Werkstückträgers 60 vorgesehen.

Es versteht sich, dass zwei Werkstückhaltebereiche eine Option darstellen, d.h. dass auch weitere Werkstückhaltebereiche an einem Werkstückträger vorgesehen sein können, beispielsweise mindestens ein Werkstückhaltebereich mit in der Zeichnung nicht dargestellten Werkstückhaltern zwischen den Werkstückhaltebereichen 65A und 65B.

Eine Positionierung der an dem Werkstückträger 60 angeordneten Werkstücke W relativ zu den Bearbeitungswerkzeugen 44 wird zumindest teilweise durch den Werkstückträger 60 geleistet. Der Werkstückträger 60 ist an einer Werkstückträger-Linearführung 70 entlang einer vertikalen Stellachse Y linear verstellbar. An dem Werkstückträger 60 angeordnete Werkstücke W können also in Bezug auf die Stellachse Y relativ zu den Bearbeitungswerkzeugen 44 verstellt werden.

Der Werkzeugschlitten 20 positioniert die Bearbeitungswerkzeuge 44 entlang der horizontalen Achsen, der Bearbeitungsachse Z1 und der Werkzeug-Stellachse X, während der optionale dritte lineare Bewegungsfreiheitsgrad durch den Werkstückträger 60 und die Werkstückträger-Linearführung 70 geleistet wird.

Die Werkstückträger-Linearführung 70 umfasst an Ständern oder Stützen 71 vorgesehene Führungsschienen 73, an denen Schlitten 72 beweglich gelagert sind, beispielsweise anhand von Rollen, Gleitstücken oder dergleichen. Die Ständer oder Stützen 71, die man auch als Türme bezeichnen könnte, stehen beispielsweise nach oben vor dem Werkzeugabschnitt 12 vor und sind an diesem befestigt.

Die Schlitten 72, die beispielsweise an jeweils einem Paar von Führungsschienen 73 beweglich gelagert sind, sind durch Schlittenantriebe 74 antreibbar. Die Schlittenantriebe 74 umfassen beispielsweise jeweils einen Antriebsmotor 75.

Ein jeweiliger Antriebsmotor 75 treibt einen jeweiligen Schlitten 72 über beispielsweise einen Spindeltrieb oder dergleichen an (was in der Zeichnung nicht dargestellt ist). Beispielsweise sind die Antriebsmotoren 75 oben an den Ständern oder Stützen 71 angeordnet, was zu Kühlungszwecken und Montagezwecken vorteilhaft ist.

Anhand einer Verstelleinrichtung 78 können die Werkstückhaltebereiche 65A und 65B abwechselnd in dem Bearbeitungsbereich 85, 185 oder dem Werkstückwechselbereich 86 positioniert werden, so dass ein Werkstückwechsel und eine Bearbeitung der Werkstücke W, die am Werkstückträger 60 gehalten sind, grundsätzlich gleichzeitig möglich ist. Die Verstelleinrichtung 78 basiert vorzugsweise auf der nachfolgend erläuterten Drehlagerung um die Positionier-Schwenkachse A.

Zur Drehlagerung um die Positionier-Schwenkachse A ist der Werkstückträger 60 an seinen Längsendbereichen anhand von Drehlagern 77 schwenkbar gelagert. Die Drehlager 77 bilden Bestandteile einer Drehlageranordnung 76. Beispielsweise ist an jedem der Schlitten 72 jeweils eines der Drehlager 77 vorgesehen. Durch die Drehlagerung an seinen Längsendbereichen ist der Werkstückträger 60, also beispielsweise der Werkstückbalken 61, optimal abgestützt, dennoch aber für die Positionierarbeit oder Positionierung der Werkstücke W für eine Bearbeitung durch die Bearbeitungswerkzeuge 44 oder ein Werkstückwechsel beweglich.

Die Verstelleinrichtung 78 umfasst also beispielsweise die Drehlageranordnung 76 sowie einen Antriebsmotor 79 zum Drehantreiben des Werkstückträgers 60 um die Positionier-Schwenkachse A.

Die Verstelleinrichtung 78 kann aber auch die lineare Verstellbarkeit entlang der vertikalen Stellachse Y umfassen, beispielsweise wenn oberhalb des Werkstückträgers 60 eine Werkstückwechseleinrichtung angeordnet ist, beispielsweise die nachfolgend noch erläuterte Entladeeinrichtung 300B.

Beispielsweise verläuft die Positionier-Schwenkachse A parallel zu der Werkzeug-Stellachse X.

Die vielseitige Beweglichkeit des Werkstückträgers 60 wird nicht nur dazu genutzt, die Werkstücke W relativ zu der Spindelanordnung 40 zu positionieren und somit zur Bearbeitung durch die Werkzeugspindeln 41 bzw. deren Bearbeitungswerkzeuge 44, sondern auch für eine Positionierung relativ zu einer Funktionsbaugruppe 90, die zur Ausführung mindestens einer Funktion an den Werkstücken W ausgestaltet ist. Nachfolgend werden mehrere Funktionalitäten vorgestellt, von denen eine vorhanden sein kann oder mehrere gleichzeitig vorhanden sein können.

Die Funktionsbaugruppe 90 umfasst beispielsweise eine Nebenspindelanordnung 190 mit einer Werkzeugspindel 91 oder mit mehreren Werkzeugspindeln 91. Die Werkzeugspindeln 91 sind beispielsweise ortsfest oder beweglich an einem Baugruppenträger 96 angeordnet.

Beim Ausführungsbeispiel sind beispielsweise zwei Werkzeugspindelreihen 92 und 93 vorgesehen, von denen die Werkzeugspindelreihe 92 in Bezug auf die Bearbeitungsachse Z1 einen größeren Abstand zu der Spindelanordnung 40 hat als die andere Werkzeugspindelreihe 93.

Die Werkzeugspindelreihen 92 und 93 verlaufen parallel zu der Werkzeug-Stellachse X, also rechtwinkelig zu der Bearbeitungsachse Z1 und der Stellachse Y.

Die Werkzeugspindelreihen 92 und 93 umfassen beispielsweise jeweils drei Werkzeugspindeln 91. Es könnten auch weniger oder mehr Werkzeugspindeln 91 vorgesehen sein.

Die Werkzeugspindeln 91 sind zweckmäßigerweise linear bzw. in einer Reihenrichtung nebeneinander angeordnet sind.

Es ist auch ein gekrümmter oder bogenförmiger Verlauf einer Anreihung von mehreren Werkzeugspindeln bei einer Funktionsbaugruppe einer erfindungsgemäßen Werkzeugmaschine möglich.

Die Werkzeugspindelreihen 92 und 93 verlaufen beispielsweise parallel zueinander.

Beispielsweise stehen die Köpfe der Werkzeugspindeln 91 mit den Werkzeugaufnahmen für Bearbeitungswerkzeuge 94 vor eine Unterseite 97 des Baugruppenträgers 96 vor. Vor eine Oberseite 98 des Baugruppenträgers 96 stehen Spindelantriebe 95 der Werkzeugspindeln 91 vor.

Spindelachsen S1-S6 der Werkzeugspindeln 91 verlaufen beispielsweise rechtwinkelig zu den Spindelachsen der Werkzeugspindeln 41.

Beispielsweise verlaufen die Spindelachsen S1-S6 der Werkzeugspindeln 91 der Funktionsbaugruppe 90 parallel zu der zweiten Bearbeitungsachse Z2. Denkbar wären aber auch Spindelachsen der Werkzeugspindeln 91, die nicht parallel zur zweiten Bearbeitungsachse Z2 sind, beispielsweise für eine Schrägflächen-Bearbeitung.

Die Stützen 71 dienen zum Tragen oder zum Stützen des Baugruppenträgers 96, der oberhalb des Werkstückträgers 60 oder Werkstückbalkens 61 angeordnet ist. Der Baugruppenträger 96 hat eine lang gestreckte Gestalt und stützt sich mit seinen Längsendbereichen 99 jeweils oberseitig an den Stützen 71 ab.

Wenn also der Werkstückträger 60 entlang der Stellachse Y, der vertikalen Stellachse, die Werkstücke W in Richtung der Werkzeugspindeln 91 bzw. deren Bearbeitungswerkzeuge 94 verstellt, bewegt er die Werkstücke W entlang einer zweiten Bearbeitungsachse Z2.

Im Bereich der Bearbeitungswerkzeuge 94 ist ein zweiter Bearbeitungsbereich 185 vorgesehen. Zur Positionierung der Werkstücke W zu dem Bearbeitungsbereich 185 hin und aus diesem heraus und auch vorzugsweise innerhalb des Bearbeitungsbereiches 185 ist der Werkstückträger 60 ausgestaltet. Dort findet nämlich die Bearbeitung durch die Bearbeitungswerkzeuge 94 bzw. die Werkzeugspindeln 91 statt.

Der Werkstückträger 60 kann beispielsweise in mehreren Positionen entlang der Stellachse Y positioniert werden, beispielsweise in Positionen Y1 und Y2.

Die Werkzeugspindeln 91 können am Baugruppenträger 96 ortsfest sein. Ein Abstand der Werkzeugspindeln 91 entspricht beispielsweise einem Abstand der Werkstückhalter 62. Somit können anhand der Werkzeugspindeln 91 mehrere Werkstücke W gleichzeitig bearbeitet werden, beispielsweise gefräst, gebohrt oder dergleichen.

Ohne weiteres können aber auch andere Funktionselemente an der Funktionsbaugruppe 90 realisiert werden, so zum Beispiel mindestens eine Prüfeinrichtung 191 und/oder mindestens eine Zentriereinrichtung 291.

Wenn also der der Werkstückträger 60 entlang der Stellachse Y oder der zweiten Bearbeitungsachse Z2 bewegt wird, kann er die Werkstücke W zu den Prüfeinrichtungen 191 verstellen, dass beispielsweise nach einer Bearbeitung durch die Spindelanordnung 40 das Bearbeitungsergebnis überprüfbar ist.

Es ist auch möglich, dass beispielsweise nach einem Werkstückwechsel im Werkstückwechselbereich 86 die Werkstücke W von dem Werkstückträger 60 zunächst zu den Zentriereinrichtungen 291 bewegt werden, nämlich durch Schwenken um die Positionier-Schwenkachse A und anschließendes Verstellen entlang der Stellachse Y, also der zweiten Bearbeitungsachse Z2, um dort in eine exakte Position für die anschließende Bearbeitung durch die Spindelanordnung 40 gebracht zu werden. Dazu werden die Werkstückhalter 62 beispielsweise etwas gelöst, sodass die Zentriereinrichtungen 292, zum Beispiel umfassend Zentrierdorne oder dergleichen, in Eingriff mit den Werkstücken W gebracht werden können und diese relativ zu den Werkstückhaltern 62 positioniert werden. Anschließend schwenkt der Werkstückträger 60 die Werkstücke W in den Bearbeitungsbereich 85 zur Bearbeitung durch die Spindelanordnung 40.

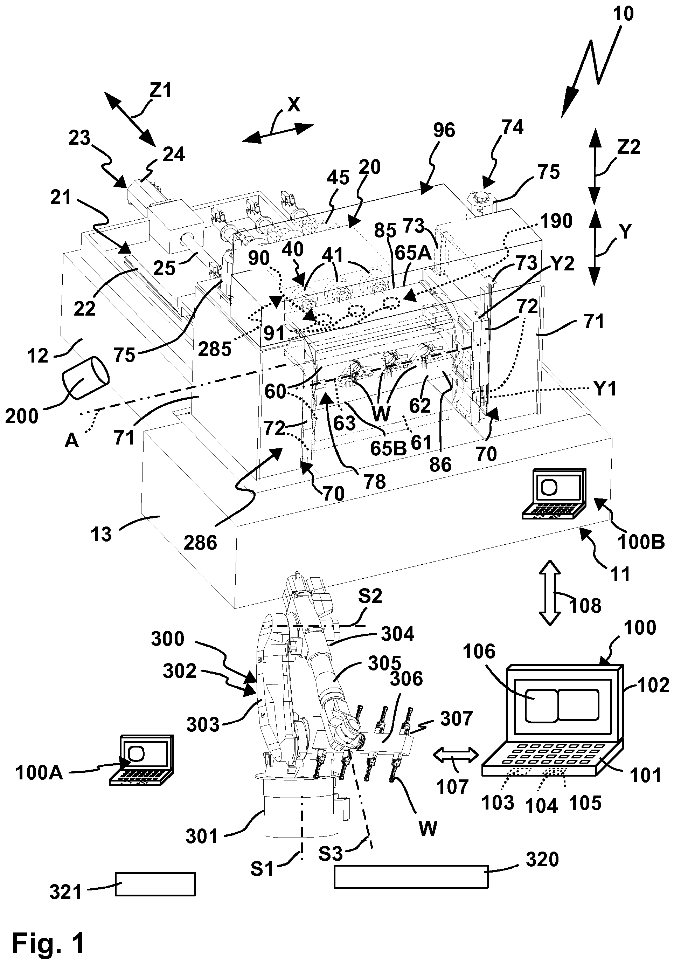

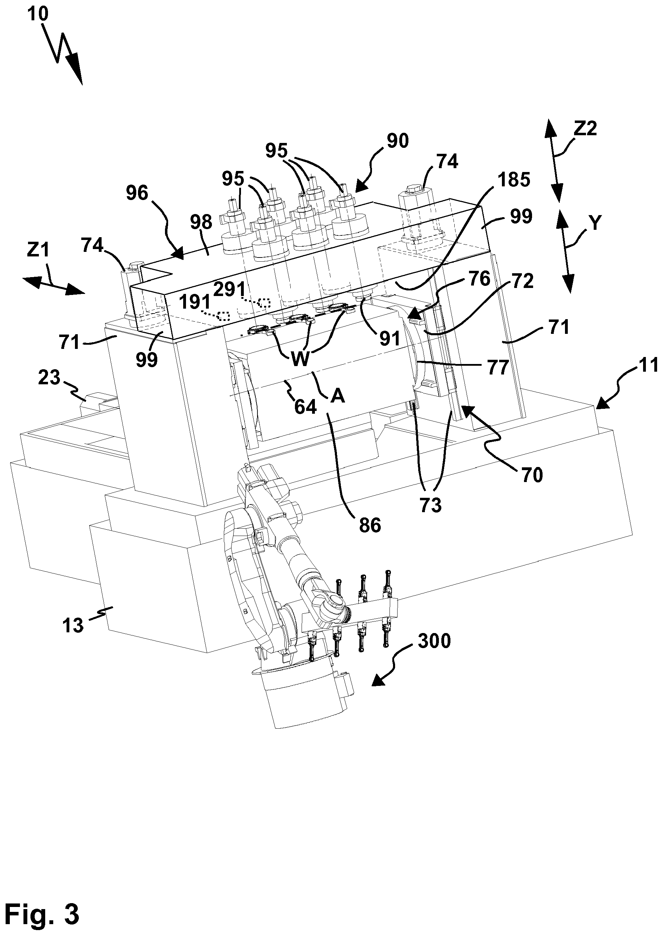

Beim Ausführungsbeispiel gemäß Figuren 1-3 ist der Baugruppenträger 96 bezüglich der Maschinenbasis 11 ortsfest.

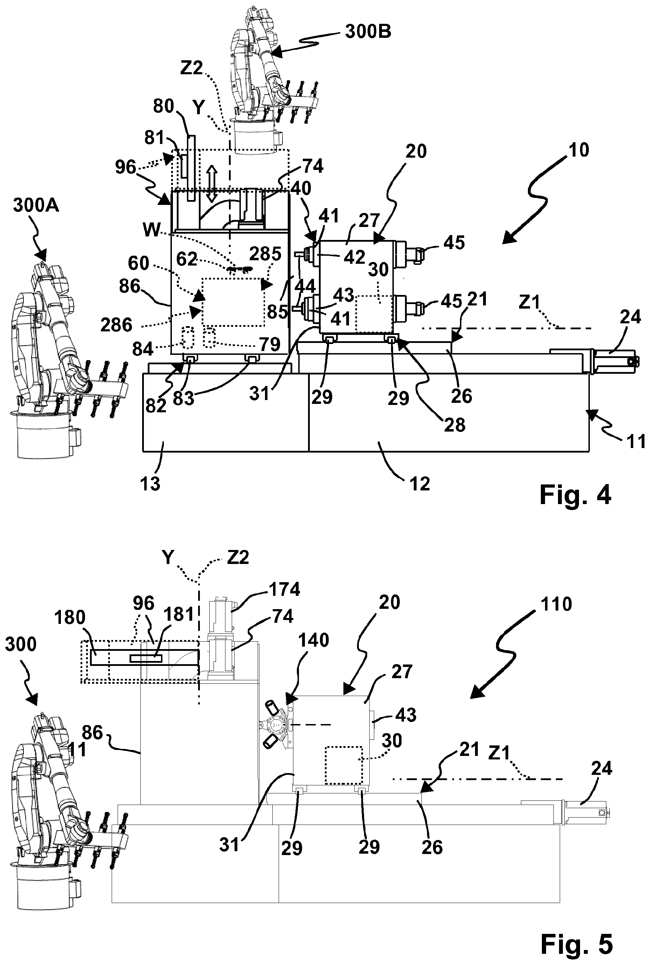

Es ist aber auch möglich, dass eine zusätzliche Verstellbarkeit vorgesehen ist, beispielsweise indem der Baugruppenträger 96 wie in der Variante gemäß Figur 4 anhand einer weiteren Linearführung 80, also beispielsweise einer Y-Linearführung, entlang der vertikalen Stellachse Y relativ zu den Stützen 71 verstellbar ist. Somit kann zumindest ein Teil der Verstellarbeit oder Positionierarbeit der Funktionsbaugruppe 90, also beispielsweise der Werkzeugspindeln 91, bezüglich der zweiten Bearbeitungsachse Z2 durch Linearführung 80 realisiert werden. Linearführung 80 ist ein Antrieb 81 zugeordnet, um den Baugruppenträger 96 entlang der Y-Achse oder der zweiten Bearbeitungsachse Z2 zu verstellen.

Weiterhin ist es denkbar, dass der Baugruppenträger 96 in einer weiteren Richtung verstellbar gelagert ist, beispielsweise entlang oder parallel zu der X-Achse. Dazu ist es beispielsweise denkbar, dass die Stützen 71 wie in Figur 4 angedeutet an einer Linearführung 82 beweglich bezüglich der Maschinenbasis 11 gelagert sind. An der Oberseite der Maschinenbasis 11 sind beispielsweise Schienen 83 vorgesehen, an denen die Stützen 71 anhand von Rollen, Gleitelementen oder dergleichen, beweglich gelagert sind. Beispielsweise ist ein Antrieb 84 zum Antreiben der Stützen 71 bei der Verstellung entlang der Linearführung 82 vorgesehen. Somit kann nicht nur der Werkstückträger 60, sondern auch die Funktionsbaugruppe 90 relativ zu der Maschinenbasis 11 entlang oder parallel zu der X-Achse verstellt werden, um die Werkstücke W bezüglich der Funktionsbaugruppe 90 und/oder der Spindelanordnung 40 zu positionieren.

Bei dem in Figur 5 dargestellten Ausführungsbeispiel einer Werkzeugmaschine 110 sind im Wesentlichen die gleichen Komponenten vorhanden wie bei der Werkzeugmaschine 10. Gleiche oder gleichartige Bauteile sind mit denselben Bezugsziffern versehen. Insoweit wird also auf die obige Beschreibung Bezug genommen.

Eine besonders bevorzugte Ausführungsform zur Verstellung einer Funktionsbaugruppe, zum Beispiel der Funktionsbaugruppe 90, ist in Figur 5 angedeutet, bei der der Baugruppenträger 96 entlang der Z1-Achse oder parallel zu der Z1-Achse anhand einer Linearführung 180 verstellbar ist. Der Linearführung 180 ist ein Antrieb 181 zugeordnet. Anhand der Linearführung 180 ist es beispielsweise möglich, die Werkstücke W, die am Werkstückträger 60 gehalten sind, zwischen den Werkstückspindelreihen 92 und 93 zu verstellen bzw. bezüglich der Werkstückspindelreihen 92 und 93 zu positionieren. Somit können beispielsweise nacheinander durch die Werkzeugspindelreihen 92 und 93 Bearbeitungen der Werkstücke W durchgeführt werden.

Weiterhin ist bei der Werkzeugmaschine 110 gemäß Figur 5 anstelle der Spindelanordnung 40 eine Anordnung mit einem oder mehreren Werkzeugrevolvern 140 vorgesehen, die einen leichten Werkzeugwechsel bei der Bearbeitung der Werkstücke W ermöglichen. Der oder die Werkzeugrevolver 140 sind beispielsweise an der Frontseite 31 des Werkzeugschlittens 30 angeordnet. Jeder Werkzeugrevolvers 140 umfasst beispielsweise einen Werkzeugträger, der um eine Revolverachse schwenkbar gelagert ist. Ein jeweils in Bearbeitungspositionen befindliches Bearbeitungswerkzeug oder eine jeweils in Bearbeitungspositionen befindliche Werkzeugaufnahme für ein Bearbeitungswerkzeug ist mit einem Spindelantrieb des Werkzeugrevolvers 140 gekoppelt und wird von diesem drehangetrieben. Der oder die Werkzeugrevolver 140 bilden beispielsweise Werkzeugwechseleinrichtungen.

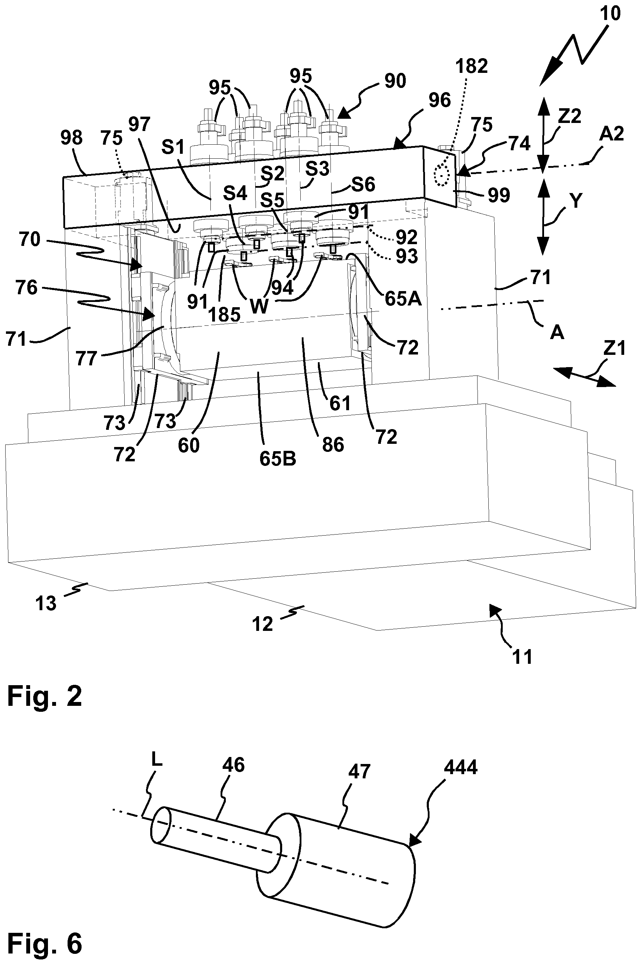

In Figur 2 ist angedeutet, dass die Funktionsbaugruppe 90 auch um beispielsweise eine Schwenkachse A2 schwenkbar sein kann. Hierfür ist der Baugruppenträger 96 beispielsweise an seinen beiden Längsenden jeweils anhand eines Drehlagers 182 bezüglich der Stützen oder Ständer 71 drehbar gelagert. Auf diese Weise können beispielsweise am Funktionsbaugruppenträger 96 an zueinander drehwinkelversetzten Seiten unterschiedliche Funktionselemente, beispielsweise an einer Seite Werkzeugspindeln mit ersten Werkzeugen, an einer anderen Seite andere Werkzeugspindeln oder Werkzeugspindeln mit zweiten, von den ersten Werkzeugen verschiedenen Werkzeugen oder auch zum Beispiel die Prüfeinrichtungen 191 oder Zentriereinrichtungen 291 angeordnet sein. Durch Drehung der Funktionsbaugruppe 90 oder des Baugruppenträgers 96 können die verschiedenen Funktionselemente in eine Bearbeitungslage bezüglich des Werkstückträgers 60, also zum Beispiel nach unten, geschwenkt werden.

Für einen schnellen und optimalen Werkstückwechsel ist beispielsweise eine Werkstückwechseleinrichtung 300, beispielsweise umfassend einen Handlingroboter oder dergleichen, im Werkstückwechselbereich 86 angeordnet.

Vorzugsweise ist eine Werkzeugwechseleinrichtung 200 vorgesehen, mit der die Bearbeitungswerkzeuge 44 und/oder die Bearbeitungswerkzeuge 94 auswechselbar sind. Die Werkzeugwechseleinrichtung 200 umfasst beispielsweise einen Handlingroboter, beispielsweise in der Art des nachfolgend beschriebenen Handlingroboters der Werkstückwechseleinrichtung 300. Bei dem Handlingroboter handelt es sich beispielsweise um einen sogenannten Knickarmroboter. Dies soll allerdings nicht als Einschränkung verstanden werden, sondern nur als Ausführungsbeispiel. Ohne weiteres könnten auch andere Handhabungsgeräte, insbesondere Greifvorrichtungen, Schub- oder Zugvorrichtungen oder dergleichen zur Handhabung von Werkstücken W vorgesehen sein.

Die Werkzeugwechseleinrichtung 200 oder auch die Werkzeugrevolver 140 sind in der Lage, Bearbeitungswerkzeuge für die erste oder die zweite Bearbeitungsart jeweils einzuwechseln oder auszuwechseln.

Die Werkstückwechseleinrichtung 300 weist beispielsweise einen bezüglich einer Basis 301 um eine vertikale Achse S1 schwenkbare Armanordnung 302 mit einem Basisarm 303 und einem daran um eine Schwenkachse S2 schwenkbar gelagerten Stellarm 304, an dem seinerseits wiederum ein in Bezug auf eine Längserstreckung des Stellarm 304 in axialer Verlängerung angeordneter Handhabungsarm 305 um eine Schwenkachse S3 schwenkbar gelagert ist. Somit kann eine Werkstück-Halterung 306 am freien Endbereich des Handhabungarms 305 quasi frei im Raum bewegt werden, um Werkstücke W am Werkstückträger 60 anzuordnen oder vom Werkstückträger 60 abzunehmen. Beispielsweise kann die Werkstückwechseleinrichtung 300 unbearbeitete Werkstücke W von einer schematisch dargestellten Fördereinrichtung 320, insbesondere einem Förderband, aufnehmen und am Werkstückträger 60 platzieren sowie bearbeitete Werkstücke W vom Werkstückträger 60 abnehmen und auf der Fördereinrichtung 320 oder auf einer anderen Fördereinrichtung 321 ablegen. Die Werkstück-Halterung 306 ist vorzugsweise ausgestaltet, jeweils mehrere Werkstücke W zu halten, sodass gleichzeitig mehrere, insbesondere drei oder vier, Werkstücke W durch die Werkstückwechseleinrichtung 300 am Werkstückträger 60 platziert oder vom Werkstückträger 60 abgenommen werden können.

Zumindest dann, wenn die Werkstücke W am Werkstückträger 60 platziert oder vom Werkstückträger 60 abgenommen werden, kommt die Werkstückwechseleinrichtung 300 direkt oder indirekt über die von ihr gehaltenen Werkstücke W in Kontakt mit dem Werkstückträger 60, sodass dieser zu Schwingungen oder Auslenkungen angeregt wird. Bei manchen Werkstückbearbeitungen, insbesondere Anbringung von feinen Bohrungen, beim Honen etc. ist dies jedoch unerwünscht. Hier schafft die nachfolgende Maßnahme Abhilfe:
Eine Steuerungseinrichtung 100 der Werkzeugmaschine 10, 110, zum Beispiel eine Computersteuerung oder eine numerische Steuerung, umfasst ein Steuerungsprogramm 105 zur Ansteuerung der Werkzeugmaschine 10, 110. Das Steuerungsprogramm 105 enthält Steuerbefehle, die ein Prozessor 103 der Steuerungseinrichtung 100 ausführen kann. Beispielsweise ist das Steuerungsprogramm 105 in einem Speicher 104 der Steuerungseinrichtung 100 gespeichert. Die Steuerungseinrichtung 100 weist ferner Eingabemittel 101, beispielsweise Maus, Tastatur oder dergleichen, sowie Ausgabemittel 102, zum Beispiel einen Monitor, akustische Ausgabemittel oder dergleichen mehr auf. An den Ausgabemitteln 102 ist beispielsweise eine grafische Bedienoberfläche 106 oder eine sonstige Anzeige der Funktion der jeweiligen Werkzeugmaschine vorgesehen. Die Steuerungseinrichtung 100 kann in ein Steuerungsnetzwerk einer Maschinenanlage, zum Beispiel einer Bearbeitungsstraße, eingebunden sein, beispielsweise über ein Bussystem.

Die Steuerungseinrichtung 100 kommuniziert über Verbindungen 107 und 108 mit der Werkstückwechseleinrichtung 300 und den verschiedenen Antrieben der Werkzeugmaschine 10, beispielsweise den Antrieben der Werkzeugspindeln 41, 91, den Schlittenantrieben 74, dem Antriebsmotor 79 und dergleichen. Jedenfalls können die Funktionen und Bewegungsvorgänge der Werkzeugmaschine 10 durch die Steuerungseinrichtung 100 vorgegeben und überwacht werden. In gleicher Weise ist die Steuerungseinrichtung 100 mit der Werkstückwechseleinrichtung 300 in Kontakt, um deren Bewegungen anzusteuern und zu überwachen.

In diesem Zusammenhang sei aber angemerkt, dass eine Steuerungseinrichtung im Sinne der Erfindung durchaus auch nur Teilfunktionen leisten kann, d.h. dass sie beispielsweise im einfachsten Fall mit lokalen Steuerungen 100A, 100B einer Werkzeugwechseleinrichtung und einer Werkzeugmaschine kommuniziert, die an sich autark die Werkzeugwechseleinrichtung und die Werkzeugmaschine ansteuern und überwachen, wobei jedoch die Steuerungseinrichtung die Bewegungsabläufe bzw. die Funktionen der lokalen Steuerungen 100B, 100A koordiniert. Das ist in Figur 1 schematisch angedeutet.

Die Steuerungseinrichtung 100 leistet jedoch sämtliche Steuerungsfunktionen und steuert die Werkzeugmaschine 10, 110 und die Werkzeugwechseleinrichtung 300 wie folgt:
Bei einer sozusagen unkritischen Werkstückbearbeitung in einer ersten Bearbeitungsart, nämlich beispielsweise beim Bohren von Löchern in die Werkstücke W durch die Werkzeugspindeln 91 bzw. die daran angeordneten Bearbeitungswerkzeuge steuert die Steuerungseinrichtung 100 die Werkstückwechseleinrichtung 300 zu einem Wechsel von Werkstücken W am Werkstückträger 60 an. Beispielsweise nimmt der Handlingroboter Werkstücke W vom Werkstückträger 60 ab, legt sie auf der Fördereinrichtung 320 ab und positioniert anschließend unbearbeitete Werkstücke W an dem jeweils im Werkstückwechselbereich 86 befindlichen Werkstückhaltebereich 65A oder 65B des Werkstückträgers 60.

Wegen der großen Beweglichkeit der Werkstückwechseleinrichtung 300 gelingt dies sogar dann, wenn sich der Werkstückhaltebereich 65 an der der Maschinenbasis 11 zugewandten Unterseite des Werkstückträgers 60 in der jeweiligen Schwenklage bezüglich der Positionier-Schwenkachse A befindet.

Vorteilhaft ist es allerdings, wenn zusätzlich zu den Werkstückhaltebereichen 65A und 65B weitere Werkstückhaltebereiche zwischen diesen Werkstückhaltebereichen 65A und 65B vorgesehen sind, so dass ein derartiger Werkstückhaltebereich an einer von der Spindelanordnung 40 abgewandten Seite horizontal von der Seite her für die Werkstückwechseleinrichtung 300 zugänglich ist.

Wenn jedoch eine Werkstückbearbeitung in einer zweiten, bei Erschütterungen wesentlich empfindlicheren Bearbeitungsart stattfindet, beispielsweise durch die Werkzeugspindeln 41 der oberen Werkzeugspindelreihe 42, findet kein Werkstückwechsel statt. In diesem Fall ist es zwar möglich, dass die Werkstückwechseleinrichtung 300 arbeitet, beispielsweise noch unbearbeitete Werkstücke W von der Fördereinrichtung 320 aufnimmt, diese aber zunächst noch nicht am Werkstückträger 60 positioniert. Die Werkzeugspindeln 41 der oberen Werkzeugspindelreihe 42 sind beispielsweise mit Feinbohrwerkzeugen ausgerüstet und bringen feine, exakte Bohrungen an den Werkstücken W an.

Die Werkzeugspindeln 41 der oberen Werkzeugspindelreihe 42 haben beispielsweise eine bessere Lagerung, beispielsweise eine hydrostatische Lagerung, und/oder für eine feinere Bearbeitung geeignetere Antriebskonzepte, beispielsweise Direktantriebe, als die Werkzeugspindeln 41 der unteren Werkzeugspindelreihe 43. Beispielsweise handelt es sich bei den Werkzeugspindeln 41 der oberen Werkzeugspindelreihe 42 um sogenannte Feinbohrspindeln, während die Werkzeugspindeln 41 der unteren Werkzeugspindelreihe 43 übliche Motorspindeln sind.

Es ist also möglich, dass beispielsweise die Werkzeugspindeln 41 der unteren Werkzeugspindelreihe 42 für eine sozusagen grobe Werkstückbearbeitung, nämlich der zweiten Bearbeitungsart, vorgesehen sind. In diesem Fall ist es möglich, dass die Werkstückwechseleinrichtung 300 während der Bearbeitung der Werkstücke W durch die Werkzeugspindeln 41 der unteren Werkzeugspindelreihe 43 Werkstücke W auf den Werkstückträger 60 lädt oder vom Werkstückträger 60 entnimmt. Die Steuerungseinrichtung 100 steuert die Werkzeugwechseleinrichtung 300 entsprechend an.

Beim Ausführungsbeispiel gemäß Figur 4 sind die Funktionen Beladen und Entladen des Werkstückträgers 60 getrennt und an unterschiedlichen Bereichen vorgesehen. Beispielsweise kann der bereits erläuterte Baugruppenträger 96, jedenfalls die Funktionsbaugruppe 90, eine Beladeeinrichtung 300B als Bestandteil einer Werkstückwechseleinrichtung aufweisen, während der Spindelgruppe 40 gegenüberliegend, d.h. auf der anderen Seite des Werkstückträgers 60, eine Entladeeinrichtung 300A vorgesehen ist. Die Beladeeinrichtung 300B bestückt oder belädt den Werkstückträger 60 während einer Bearbeitung durch die Werkzeugspindeln 41 und/oder 91 in der ersten Bearbeitungsart mit Werkstücken W. Während dieser ersten Bearbeitungsart kann auch die Entladeeinrichtung 300A Werkstücke W vom Werkstückträger 60 entnehmen, weil gewisse Erschütterungen bei dieser sozusagen etwas gröberen Werkstückbearbeitung nicht stören. Wenn hingegen beispielsweise die Werkzeugspindeln 41 der oberen Werkzeugspindelreihe 42, die Feinbohrspindeln, aktiv sind, steuert die Steuerungseinrichtung 100, die in Figur 5 nicht dargestellt ist, die insgesamt eine Werkstückwechseleinrichtung bildenden Komponenten Beladeeinrichtung 300B und Entladeeinrichtung 300A so an, dass diese jedenfalls keinen direkten Kontakt oder Kontakt anhand von Werkstücken W mit dem Werkstückträger 60 haben.

Es versteht sich, dass durch einen Werkzeugwechsel an einer Werkzeugspindel deren Zuordnung zu der ersten Bearbeitungsart oder zweiten Bearbeitungsart geändert werden kann. So können beispielsweise durch die Werkzeugwechseleinrichtung 200 Bearbeitungswerkzeuge 41 ausgetauscht werden, sodass beispielsweise für die erste Bearbeitungsart Bearbeitungswerkzeuge mit kleinerem Durchmesser und für die zweite Bearbeitungsart Bearbeitungswerkzeuge mit demgegenüber größerem, jedoch präziserem Durchmesser verwendet werden.

Anhand von Figur 6 wird deutlich, dass auch ein Bearbeitungswerkzeug ohne einen Werkzeugwechsel für die erste und die zweite Bearbeitungsart tauglich sein kann. Ein schematisch dargestelltes Bearbeitungswerkzeug 444, zum Beispiel ein Bohrwerkzeug, weist beispielsweise einen Bearbeitungsbereich 46, der der ersten Bearbeitungsart zugeordnet ist, und einen Bearbeitungsbereich 47, der der zweiten Bearbeitungsart zugeordnet ist auf. Die Bearbeitungsbereiche 46, 47 sind in Bezug auf eine Längsachse L oder eine Längserstreckung des Bearbeitungswerkzeugs 444 hintereinander angeordnet. Beispielsweise haben die Bearbeitungsbereiche 46, 47 unterschiedliche Durchmesser, so das der Bearbeitungsbereich 46 beispielsweise eine Vorbohrung an einem Werkstück W vornimmt, während der Bearbeitungsbereich 47 für eine feinere, exakte Bohrung ausgelegt ist.

Es versteht sich, dass die Darstellung in Figur 6 sehr schematisch und überhöht ist, um die Funktion zu veranschaulichen. Wenn eine Werkzeugspindel 41 entlang der Bearbeitungsachse Z1 in Richtung des Werkstücks W bewegt wird, also entlang seiner Längsachse L verstellt wird, kommt zunächst der Bearbeitungsbereich 46 in Eingriff mit dem Werkstück W. Während dieser ersten Bearbeitungsart des Werkstücks W kann die Werkstückwechseleinrichtung 300 Werkstücke W am Werkstückträger 60 wechseln. Wenn jedoch das Bearbeitungswerkzeug 444 weiter in Richtung der Längsachse L oder der Bearbeitungsachse Z1 zum Werkstück W verstellt wird, kommt der Bearbeitungsbereich 47 in Eingriff mit dem Werkstück W, d.h. es findet die zweite Bearbeitungsart Stadt. Dann vermeidet die Werkstückwechseleinrichtung 300 durch Ansteuerung der Steuerungseinrichtung 100 den Kontakt mit dem Werkstückträger 60, das heißt es findet kein Werkstückwechsel statt.

## Patentansprüche

1. Werkzeugmaschine mit einer Spindelanordnung (40) und einem Werkstückträger (60), wobei die Spindelanordnung (40) mindestens eine Werkzeugspindel (41) zur Aufnahme eines Bearbeitungswerkzeugs (44) aufweist, wobei der Werkstückträger (60) mindestens zwei Werkstückhaltebereiche (65A, 65B) mit jeweils mindestens einem Werkstückhalter (62) zum Halten eines Werkstücks (W) aufweist, wobei der Werkstückträger (60) und die mindestens eine Werkzeugspindel (41) zur Bearbeitung mindestens eines an dem Werkstückträger (60) gehaltenen Werkstücks (W) anhand des Bearbeitungswerkzeugs (44) entlang einer insbesondere horizontalen Bearbeitungsachse (Z1) relativ zueinander verstellbar sind, wobei die Werkzeugmaschine (10) eine Werkstückwechseleinrichtung (300) zum Beladen des Werkstückträgers (60) mit Werkstücken (W) und Entladen des Werkstückträgers (60) aufweist, und wobei die Werkzeugmaschine (10) eine Verstelleinrichtung (78) zum Verstellen der Werkstückhaltebereiche (65A, 65B) des Werkstückträgers (60) zwischen einer der Spindelanordnung (40) zugewandten Bearbeitungsposition (285) zur Bearbeitung mindestens eines an dem jeweiligen Werkstückhaltebereich (65A, 65B) gehaltenen Werkstücks (W) und einer der Werkstückwechseleinrichtung (300) zugewandten Werkstückwechselposition (286) zum Wechseln von Werkstücken durch die Werkstückwechseleinrichtung (300) aufweist, **dadurch gekennzeichnet, dass** sie eine Steuerungseinrichtung (100) zum Ansteuern der Werkzeugmaschine (10) derart aufweist, dass die Werkstückwechseleinrichtung (300) während einer Bearbeitung von an einem Werkstückhaltebereich (65A, 65B) des Werkstückträgers (60) gehaltenen Werkstücken (W) durch die Spindelanordnung (40) in einer ersten Bearbeitungsart an dem anderen Werkstückhaltebereich (65A, 65B) des Werkstückträgers (60) gehaltene Werkstücke (W) gleichzeitig austauscht und während einer Bearbeitung von an einem Werkstückhaltebereich (65A, 65B) gehaltenen Werkstücken (W) in einer zweiten Bearbeitungsart, bei der die Spindelanordnung (40) ein jeweiliges Werkstück (W) mit einer gegenüber der ersten Bearbeitungsart höheren Anforderung an eine Ruhelage des Werkstückträgers (60) bearbeitet, keine Werkstücke (W) am Werkstückträger (60) anordnet oder vom Werkstückträger (60) entfernt.

2. Werkzeugmaschine nach Anspruch 1, **dadurch gekennzeichnet, dass** die Steuerungseinrichtung (100) zum Ansteuern der Werkzeugmaschine derart ausgestaltet ist, dass außerhalb der Bearbeitungsposition (285) befindliche Werkstückhalter (62) während einer Werkstückbearbeitung (W) in der zweiten Bearbeitungsart nicht betätigt werden, insbesondere nicht in Richtung einer Anschlagposition und/oder einer ein Werkstück (W) haltenden Spannstellung, betätigt werden und/oder nur während der Werkstückbearbeitung (W) in der ersten Bearbeitungsart zwischen einer ein Werkstück (W) haltenden Halteposition und einer ein Werkstück (W) freigebenden Freigabeposition verstellt werden.

3. Werkzeugmaschine nach Anspruch 1 oder 2, **dadurch gekennzeichnet, dass** die Steuerungseinrichtung (100) zum Ansteuern der Werkzeugmaschine (10) derart ausgestaltet ist, dass sich die Werkstückwechseleinrichtung (300) während der Bearbeitung der Werkstücke (W) in der zweiten Bearbeitungsart abseits des Werkstückträgers (60) bewegt, insbesondere Handhabungsvorgänge zum Aufnehmen oder Ablegen von Werkstücken (W) durchführt.

4. Werkzeugmaschine nach einem der vorhergehenden Ansprüche, **dadurch gekennzeichnet, dass** die Spindelanordnung (40) mindestens eine erste, der ersten Bearbeitungsart zugeordnete Werkzeugspindel (41) und mindestens eine zweite, der zweiten Bearbeitungsart zugeordnete Werkzeugspindel (41) aufweist.

5. Werkzeugmaschine nach Anspruch 4, **dadurch gekennzeichnet, dass** die mindestens erste Werkzeugspindel (41) einen Bestandteil einer ersten Werkzeugspindelreihe (42, 43) mit mindestens zwei in einer Reihenrichtung nebeneinander angeordneten, der ersten Bearbeitungsart zugeordneten Werkzeugspindeln (41) bildet und die mindestens eine zweite Werkzeugspindel (41) einen Bestandteil einer zweiten Werkzeugspindelreihe (42, 43) mit mindestens zwei in einer Reihenrichtung nebeneinander angeordneten Werkzeugspindeln (41) bildet, die der zweiten Bearbeitungsart zugeordnet sind.

6. Werkzeugmaschine nach Anspruch 4 oder 5, **dadurch gekennzeichnet, dass** die mindestens eine erste Werkzeugspindel (41) eine der ersten Bearbeitungsart zugeordnete erste Lagerung und/oder einen der ersten Bearbeitungsart zugeordneten ersten Antrieb aufweist und die mindestens eine zweite Werkzeugspindel (41) eine der zweiten Bearbeitungsart zugeordnete zweite Lagerung und/oder einen der zweiten Bearbeitungsart zugeordneten weiteren Antrieb aufweist und/oder dass an der mindestens einen ersten, der ersten Bearbeitungsart zugeordneten Werkzeugspindel (41) ein erstes Bearbeitungswerkzeug und der mindestens einen zweiten, der zweiten Bearbeitungsart zugeordneten Werkzeugspindel (41) ein von dem ersten Bearbeitungswerkzeug verschiedenes zweites Bearbeitungswerkzeug angeordnet ist und/oder dass die mindestens eine der ersten Bearbeitungsart zugeordnet erste Werkzeugspindel (41) und die mindestens eine der zweiten Bearbeitungsart zugeordnete zweite Werkzeugspindel (41) an einem gemeinsamen Spindelträger angeordnet sind.

7. Werkzeugmaschine nach einem der vorhergehenden Ansprüche, **dadurch gekennzeichnet, dass** an der mindestens einen Werkzeugspindel (41) ein für die erste Bearbeitungsart und die zweite Bearbeitungsart geeignetes Bearbeitungswerkzeug angeordnet ist, insbesondere ein Bearbeitungswerkzeug mit einer ersten Schneidenanordnung und einer von der ersten Schneidenanordnung verschiedenen zweiten Schneidenanordnung.

8. Werkzeugmaschine nach einem der vorhergehenden Ansprüche, **dadurch gekennzeichnet, dass** die Verstelleinrichtung (78) ein Schwenklager und einen Schwenkantrieb zum Schwenken des Werkstückträgers (60) um eine Positionier-Schwenkachse aufweist und/oder eine Linearführung zum linearen Verstellen des Werkstückträgers (60) aufweist.

9. Werkzeugmaschine nach einem der vorhergehenden Ansprüche, **dadurch gekennzeichnet, dass** sie einen Werkzeugwechsler zum Wechseln von Bearbeitungswerkzeugen aufweist.

10. Werkzeugmaschine nach einem der vorhergehenden Ansprüche, **dadurch gekennzeichnet, dass** der Werkstückträger (60) quer zu der Bearbeitungsachse (Z1) entlang einer Stellachse (Y) anhand einer Werkstückträger-Linearführung (70) relativ zu der Spindelanordnung (40) verstellbar gelagert ist.

11. Werkzeugmaschine nach Anspruch 10, **dadurch gekennzeichnet, dass** neben der Spindelanordnung (40) und dem Werkstückträger (60) eine Funktionsbaugruppe (90) zur Ausführung mindestens einer Funktion an einem an dem mindestens einen Werkstückhalter (62) angeordneten Werkstück (W) angeordnet ist und der Werkstückträger (60) zur Positionierung des mindestens einen Werkstückhalters (62) relativ zu der Funktionsbaugruppe (90) entlang der eine zweite Bearbeitungsachse (Z2) bildenden Stellachse (Y) der Werkstückträger-Linearführung (70) verstellbar ist.

12. Werkzeugmaschine nach Anspruch 11, **dadurch gekennzeichnet, dass** die Funktionsbaugruppe (90) einen Bestandteil der Werkstückwechseleinrichtung (300) bildet oder zumindest eine Komponente der Werkstückwechseleinrichtung (300) aufweist oder trägt und/oder die Funktionsbaugruppe (90) mindestens eine Werkzeugspindel (91) zur Bearbeitung des mindestens einen Werkstücks (W) anhand eines Bearbeitungswerkzeugs (95) umfasst, wobei die mindestens eine Werkzeugspindel (91) der Funktionsbaugruppe (90) zweckmäßigerweise ortsfest bezüglich einer Maschinenbasis (11) der Werkzeugmaschine an einem Baugruppenträger (96) der Funktionsbaugruppe (90) angeordnet ist oder an dem Baugruppenträger (96) anhand einer Linearführung, insbesondere entlang einer zu der ersten Bearbeitungsachse (Z1) parallelen Stellachse (Y), linear beweglich gelagert ist.

13. Werkzeugmaschine nach einem der vorhergehenden Ansprüche, **dadurch gekennzeichnet, dass** die Werkstückwechseleinrichtung (300) und die Spindelanordnung (40) an einander entgegengesetzten Seiten des Werkstückträgers (60) angeordnet sind und/oder die Werkstückwechseleinrichtung (300) eine Beladeeinrichtung (300B) zum Beladen des Werkstückträgers (60) mit Werkstücken (W) und eine insbesondere in einem Winkelabstand zu der Beladeeinrichtung (300B) angeordnete Entladeeinrichtung (300A) zum Entladen des Werkstückträgers (60) umfasst, die an verschiedenen Seiten des Werkstückträgers angeordnet sind.

14. Verfahren für eine Werkzeugmaschine mit einer Spindelanordnung (40) und einem Werkstückträger (60), wobei die Spindelanordnung (40) mindestens eine Werkzeugspindel (41) zur Aufnahme eines Bearbeitungswerkzeugs (44) aufweist, wobei der Werkstückträger (60) mindestens zwei Werkstückhaltebereichen (65A, 65B) mit jeweils mindestens einem Werkstückhalter (62) zum Halten eines Werkstücks (W) aufweist, wobei der Werkstückträger (60) und die mindestens eine Werkzeugspindel (41) zur Bearbeitung mindestens eines an dem Werkstückträger (60) gehaltenen Werkstücks (W) anhand des Bearbeitungswerkzeugs (44) entlang einer insbesondere horizontalen Bearbeitungsachse (Z1) relativ zueinander verstellbar sind, wobei die Werkzeugmaschine (10) eine Werkstückwechseleinrichtung (300) zum Beladen des Werkstückträgers (60) mit Werkstücken (W) und Entladen des Werkstückträgers (60) aufweist, und wobei die Werkzeugmaschine (10) eine Verstelleinrichtung (78) zum Verstellen der Werkstückhaltebereiche (65A, 65B) des Werkstückträgers (60) zwischen einer der Spindelanordnung (40) zugewandten Bearbeitungsposition (285) zur Bearbeitung mindestens eines an dem jeweiligen Werkstückhaltebereich (65A, 65B) gehaltenen Werkstücks (W) und einer der Werkstückwechseleinrichtung (300) zugewandten Werkstückwechselposition (286) zum Wechseln von Werkstücken (W) durch die Werkstückwechseleinrichtung (300) aufweist, **gekennzeichnet durch**:
- Ansteuern der Werkzeugmaschine derart, dass die Werkstückwechseleinrichtung während einer Bearbeitung von an einem Werkstückhaltebereich (65A, 65B) des Werkstückträgers (60) gehaltenen Werkstücken (W) durch die Spindelanordnung (40) in einer ersten Bearbeitungsart an dem anderen Werkstückhaltebereich (65A, 65B) des Werkstückträgers (60) gehaltene Werkstücke (W) gleichzeitig austauscht und während einer Bearbeitung von an einem Werkstückhaltebereich (65A, 65B) gehaltenen Werkstücken (W) in einer zweiten Bearbeitungsart, bei der die Spindelanordnung (40) ein jeweiliges Werkstück (W) mit einer gegenüber der ersten Bearbeitungsart höheren Anforderung an eine Ruhelage des Werkstückträgers (60) bearbeitet, keine Werkstücke (W) am Werkstückträger (60) anordnet oder vom Werkstückträger (60) entfernt.

15. Verfahren nach Anspruch 14, **dadurch gekennzeichnet, dass** die Werkstückwechseleinrichtung (300) während der Bearbeitung der Werkstücke (W) in der zweiten Bearbeitungsart abseits des Werkstückträgers (60) bewegt wird, insbesondere Handhabungsvorgänge zum Aufnehmen oder Ablegen von Werkstücken (W) durchführt.

## Claims

1. Machine tool with a spindle assembly (40) and a workpiece carrier (60), wherein the spindle assembly (40) has at least one tool spindle (41) for holding a machining tool (44), wherein the workpiece carrier (60) has at least two workpiece holding areas (65A, 65B), each having at least one workpiece holder (62) for holding a workpiece (W), wherein the workpiece carrier (60) and the tool spindle or spindles (41) is or are adjustable relative to one another along a machining axis (Z1), in particular horizontal, for machining at least one workpiece (W) held on the workpiece carrier (60) with the aid of the machining tool (44), wherein the machine tool (10) has a workpiece changeover unit (300) for loading the workpiece carrier (60) with workpieces (W) and for unloading the workpiece carrier (60), and wherein the machine tool (10) has an adjusting device (78) for adjusting the workpiece holding areas (65A, 65B) of the workpiece carrier (60) between a machining position (285) facing the spindle assembly (40), for machining at least one workpiece (W) held in the respective workpiece holding area (65A, 65B), and a workpiece changeover position (286) facing the workpiece changeover unit (300), for changeover of workpieces by the workpiece changeover unit (300), **characterised in that** it has a control unit (100) for driving the machine tool (10) in such a way that the workpiece changeover unit (300), during machining of workpieces (W) held in a workpiece holding area (65A, 65B) of the workpiece carrier (60) by the spindle assembly (40) in a first machining mode, simultaneously changes workpieces (W) held in the other workpiece holding area (65A, 65B) of the workpiece carrier (60) and, during machining of workpieces (W) held in a workpiece holding area (65A, 65B) in a second machining mode, in which the spindle assembly (40) machines a respective workpiece (W) with a higher requirement for a rest position of the workpiece carrier (60) as compared with the first machining mode, fits no workpieces (W) to the workpiece carrier (60) nor removes them from the workpiece carrier (60).

2. Machine tool according to claim 1, **characterised in that** the control unit (100) for driving the machine tool is so designed that workpiece holders (62) located outside the machining position (285) during workpiece machining (W) in the second machining mode are not actuated, in particular are not actuated in the direction of a stop position and/or a clamping position holding a workpiece (W), and/or are adjusted between a holding position in which a workpiece (W) is held and a release position releasing a workpiece (W) only during workpiece machining (W) in the first machining mode.

3. Machine tool according to claim 1 or 2, **characterised in that** the control unit (100) for driving the machine tool (10) is so designed that the workpiece changeover unit (300), during the machining of workpieces (W) in the second machining mode, moves at a distance from the workpiece carrier (60), in particular carrying out handling processes for the picking up or laying down of workpieces (W).

4. Machine tool according to any of the preceding claims, **characterised in that** the spindle assembly (40) has at least one first tool spindle (41) assigned to the first machining mode and at least one tool spindle (41) assigned to the second machining mode.

5. Machine tool according to claim 4, **characterised in that** the first tool spindle or spindles (41) forms or form part of a first tool spindle row (42, 43) with at least two tool spindles (41) arranged next to one another in a row direction and assigned to the first machining mode, and the second tool spindle or spindles (41) forms or form part of a second tool spindle row (42, 43) with at least two tool spindles (41) arranged next to one another in a row direction and assigned to the second machining mode.

6. Machine tool according to claim 4 or 5, **characterised in that** the first tool spindle or spindles (41) has or have a first bearing assigned to the first machining mode and/or a first drive assigned to the first machining mode, and the second tool spindle or spindles (41) has or have a second bearing assigned to the second machining mode and/or a further drive assigned to the second machining mode, and/or that on the first tool spindle or spindles (41) assigned to the first machining mode a first machining tool is mounted and on the second tool spindle or spindles (41) assigned to the second machining mode a second machining tool differing from the first machining tool is mounted, and/or that the first tool spindle or spindles (41) assigned to the first machining mode and the second tool spindle or spindles (41) assigned to the second machining mode are mounted on a common spindle support.

7. Machine tool according to any of the preceding claims, **characterised in that** on the tool spindle or spindles (41) there is mounted a machining tool suitable for the first machining mode and the second machining mode, in particular a machining tool with a first cutter assembly and a second cutter assembly differing from the first cutter assembly.

8. Machine tool according to any of the preceding claims, **characterised in that** the adjusting device (78) has a swivel bearing and a swivel drive for swivelling the workpiece carrier (60) around a positioning swivel axis and/or a linear guide for linear adjustment of the workpiece carrier (60).

9. Machine tool according to any of the preceding claims, **characterised in that** it has a tool changer for the changeover of machining tools.

10. Machine tool according to any of the preceding claims, **characterised in that** the workpiece carrier (60) is mounted adjustably relative to the spindle assembly (40), transversely to the machining axis (Z1) along an adjusting axis (Y) with the aid of a workpiece carrier linear guide (70).

11. Machine tool according to claim 10, **characterised in that** there is provided, next to the spindle assembly (40) and the workpiece carrier (60), a function module (90) for executing at least one function on a workpiece (W) mounted on the workpiece holder or holders (62), and the workpiece carrier (60) is adjustable along the adjusting axis (Y) of the workpiece carrier linear guide (70) forming a second machining axis (Z2), for positioning the workpiece holder or holders (62) relative to the function module (90).

12. Machine tool according to claim 11, **characterised in that** the function module (90) forms part of the workpiece changeover unit (300) or has or carries at least one component of the workpiece changeover unit (300), and/or the function module (90) includes at least one tool spindle (91) for machining the workpiece or workpieces (W) with the aid of a machining tool (95), wherein the tool spindle or spindles (91) of the function module (90) is or are expediently mounted immovably relative to a machine base (11) of the machine tool on a module support (96) of the function module (90), or is or are mounted with linear movement facility on the module support (96) with the aid of a linear guide, in particular along an adjusting axis (Y) parallel to the first machining axis (Z1).

13. Machine tool according to any of the preceding claims, **characterised in that** the workpiece changeover unit (300) and the spindle assembly (40) are arranged on opposite sides of the workpiece carrier (60), and/or the workpiece changeover unit (300) includes a loading device (300B) for loading the workpiece carrier (60) with workpieces (W) and an unloading device (300A) for unloading the workpiece carrier (60), in particular arranged at an angular distance from the loading device (300B), and which are arranged on different sides of the workpiece carrier.

14. Method for a machine tool with a spindle assembly (40) and a workpiece carrier (60), wherein the spindle assembly (40) has at least one tool spindle (41) for holding a machining tool (44), wherein the workpiece carrier (60) has at least two workpiece holding areas (65A, 65B), each having at least one workpiece holder (62) for holding a workpiece (W), wherein the workpiece carrier (60) and the tool spindle or spindles (41) are adjustable relative to one another along a machining axis (Z1), in particular horizontal, for machining at least one workpiece (W) held on the workpiece carrier (60) with the aid of the machining tool (44), wherein the machine tool (10) has a workpiece changeover unit (300) for loading the workpiece carrier (60) with workpieces (W) and for unloading the workpiece carrier (60), and wherein the machine tool (10) has an adjusting device (78) for adjusting the workpiece holding areas (65A, 65B) of the workpiece carrier (60) between a machining position (285) facing the spindle assembly (40), for machining at least one workpiece (W) held in the respective workpiece holding area (65A, 65B), and a workpiece changeover position (286) facing the workpiece changeover unit (300), for changeover of workpieces by the workpiece changeover unit (300), **characterised by**
- driving of the machine tool in such a way that the workpiece changeover unit (300), during machining of workpieces (W) held in a workpiece holding area (65A, 65B) of the workpiece carrier (60) by the spindle assembly (40) in a first machining mode, simultaneously changes workpieces (W) held in the other workpiece holding area (65A, 65B) of the workpiece carrier (60) and, during machining of workpieces (W) held in a workpiece holding area (65A, 65B) in a second machining mode, in which the spindle assembly (40) machines a respective workpiece (W) with a higher requirement for a rest position of the workpiece carrier (60) as compared with the first machining mode, fits no workpieces (W) to the workpiece carrier (60) nor removes them from the workpiece carrier (60).

15. Method according to claim 14, **characterised in that** the workpiece changeover unit (300), during the machining of workpieces (W) in the second machining mode, moves at a distance from the workpiece carrier (60), in particular carrying out handling processes for the picking up or laying down of workpieces (W).

## Revendications

1. Machine-outil avec un ensemble de broches (40) et un support de pièce (60), dans laquelle l'ensemble de broches (40) présente au moins une broche porte-outil (41) servant à recevoir un outil d'usinage (44), dans laquelle le support de pièce (60) présente au moins deux zones de maintien de pièce (65A, 65B) avec respectivement au moins un porte-pièce (62) servant à maintenir une pièce (W), dans laquelle le porte-pièce (60) et l'au moins une broche porte-outil (41) peuvent être ajustées l'une par rapport à l'autre aux fins de l'usinage d'au moins une pièce (W) maintenue au niveau du support de pièce (60) à l'aide de l'outil d'usinage (44) le long d'un axe d'usinage (Z1) en particulier horizontal, dans laquelle la machine-outil (10) présente un dispositif de changement de pièce (300) servant à charger le support de pièce (60) en pièces (W) et servant à décharger le support de pièce (60), et dans laquelle la machine-outil (10) présente un dispositif d'ajustement (78) servant à ajuster les zones de maintien de pièce (65A, 65B) du support de pièce (60) entre une position d'usinage (285) tournée vers l'ensemble de broches (40), servant à usiner au moins une pièce (W) maintenue au niveau de la zone de maintien de pièce (300) respective et une position de changement de pièce (286) tournée vers le dispositif de changement de pièce (300), servant à changer des pièces par le dispositif de changement de pièce (300), **caractérisée en ce qu'**elle présente un dispositif de commande (100) servant à piloter la machine-outil (10) de telle manière que le dispositif de changement de pièce (300) remplace dans le même temps pendant un usinage de pièces (W) maintenues au niveau d'une zone de maintien de pièce (65A, 65B) du support de pièce (60) des pièces (W) maintenues par l'ensemble de broches (40) lors d'un premier type d'usinage au niveau de l'autre zone de maintien de pièce (65A, 65B) du support de pièce (60) et ne dispose aucune pièce (W) au niveau du support de pièce (60) ou n'en retire aucune du support de pièce (60) pendant un usinage de pièces (W) maintenues au niveau d'une zone de maintien de pièce (65A, 65B) lors d'un deuxième type d'usinage, où l'ensemble de broches (40) usine une pièce (W) respective avec une exigence plus élevée par rapport au premier type d'usinage au niveau d'une position de repos du support de pièce (60).

2. Machine-outil selon la revendication 1, **caractérisée en ce que** le dispositif de commande (100) est configuré pour piloter la machine-outil de telle manière que des porte-pièce (62) se trouvant en dehors de la position d'usinage (285) ne sont pas actionnés pendant un usinage de pièce (W) lors du deuxième type d'usinage, en particulier ne sont pas actionnés en direction d'une position de butée et/ou d'une position de serrage maintenant une pièce (W) et/ou sont ajustés seulement pendant l'usinage de pièce (W) lors du premier type d'usinage entre une position de maintien maintenant une pièce (W) et une position de libération libérant une pièce (W).

3. Machine-outil selon la revendication 1 ou 2, **caractérisée en ce que** le dispositif de commande (100) est configuré pour piloter la machine-outil (10) de telle manière que le dispositif de changement de pièce (300) se déplace pendant l'usinage des pièces (W) selon le deuxième type d'usinage à l'écart du support de pièce (60), en particulier met en oeuvre des opérations de manutention servant à recevoir ou à déposer des pièces (W).

4. Machine-outil selon l'une quelconque des revendications précédentes, **caractérisée en ce que** l'ensemble de broches (40) présente au moins une première broche porte-outil (41) associée au premier type d'usinage et au moins une deuxième broche porte-outil (41) associée au deuxième type d'usinage.

5. Machine-outil selon la revendication 4, **caractérisée en ce que** l'au moins une première broche porte-outil (41) forme un élément constitutif d'une première rangée de broches porte-outil (42, 43) avec au moins deux broches porte-outil (41) disposées les unes à côté des autres dans une direction d'alignement, associées au premier type d'usinage, et l'au moins une deuxième broche porte-outil (41) forme un élément constitutif d'une deuxième rangée de broches porte-outil (42, 43) avec au moins deux broches porte-outil (41) disposées les unes à côté des autres dans une direction d'alignement, qui sont associées au deuxième type d'usinage.

6. Machine-outil selon la revendication 4 ou 5, **caractérisée en ce que** l'au moins une première broche porte-outil (41) présente un premier palier associé au premier type d'usinage et/ou un premier entraînement associé au premier type d'usinage, et l'au moins une deuxième broche porte-outil (41) présente un deuxième palier associé au deuxième type d'usinage et/ou un autre entraînement associé au deuxième type d'usinage, et/ou qu'un premier outil d'usinage est disposé au niveau de l'au moins une première broche porte-outil (41) associée au premier type d'usinage et un deuxième outil d'usinage différent du premier outil d'usinage est disposé au niveau de l'au moins une deuxième broche porte-outil (41) associée au deuxième type d'usinage, et/ou que l'au moins une première broche porte-outil (41) associée au premier type d'usinage et l'au moins une deuxième broche porte-outil (41) associée au deuxième type d'usinage sont disposées au niveau d'un support de broche commun.

7. Machine-outil selon l'une quelconque des revendications précédentes, **caractérisée en ce qu'**un outil d'usinage adapté pour le premier type d'usinage et le deuxième type d'usinage est disposé au niveau de l'au moins une broche porte-outil (41), en particulier un outil d'usinage avec un premier ensemble de tranchants et un deuxième ensemble de tranchants différent du premier ensemble de tranchants.

8. Machine-outil selon l'une quelconque des revendications précédentes, **caractérisée en ce que** le dispositif d'ajustement (78) présente un palier de pivotement et un entraînement de pivotement servant à faire pivoter le support de pièce (60) autour de l'axe de pivotement de positionnement et/ou un guidage linéaire servant à ajuster de manière linéaire le support de pièce (60).

9. Machine-outil selon l'une quelconque des revendications précédentes, **caractérisée en ce qu'**elle présente un échangeur d'outil servant à changer des outils d'usinage.

10. Machine-outil selon l'une quelconque des revendications précédentes, **caractérisée en ce que** le support de pièce (60) est monté de manière à pouvoir être ajusté de manière transversale par rapport à l'axe d'usinage (Z1) le long d'un axe de réglage (Y) à l'aide d'un guidage linéaire de support de pièce (70) par rapport à l'ensemble de broches (40).

11. Machine-outil selon la revendication 10, **caractérisée en ce qu'**un module fonctionnel (90) servant à exécuter au moins une fonction au niveau d'une pièce (W) disposée au niveau de l'au moins un porte-pièce (62) est disposé à côté de l'ensemble de broches (40) et du support de pièce (60), et le support de pièce (60) peut être ajusté, aux fins du positionnement de l'au moins un porte-pièce (62), par rapport au module fonctionnel (90) le long de l'axe de réglage (Y), formant un deuxième axe d'usinage (Z2), du guidage linéaire de support de pièce (70).

12. Machine-outil selon la revendication 11, **caractérisée en ce que** le module fonctionnel (90) forme un élément constitutif du dispositif de changement de pièce (300) ou présente ou supporte au moins un composant du dispositif de changement de pièce (300), et/ou le module fonctionnel (90) comprend au moins une broche porte-outil (91) servant à usiner l'au moins une pièce (W) à l'aide d'un outil d'usinage (95), dans laquelle l'au moins une broche porte-outil (91) du module fonctionnel (90) est disposée de manière appropriée de manière stationnaire par rapport à une base de machine (11) de la machine-outil au niveau d'un support de module (96) du module fonctionnel (90) ou est montée de manière mobile linéairement au niveau du support de module (96) à l'aide d'un guidage linéaire, en particulier le long d'un axe de réglage (Y) parallèle au premier axe d'usinage (Z1).

13. Machine-outil selon l'une quelconque des revendications précédentes, **caractérisée en ce que** le dispositif de changement de pièce (300) et l'ensemble de broches (40) sont disposés au niveau de côtés opposés les uns aux autres du support de pièce (60) et/ou le dispositif de changement de pièce (300) comprend un dispositif de chargement (300B) servant à charger le support de pièce (60) en pièces (W) et un dispositif de déchargement (300A) disposé en particulier à une distance angulaire par rapport au dispositif de chargement (300B), servant à décharger le support de pièce (60), qui sont disposés au niveau de côtés différents du support de pièce.

14. Procédé pour une machine-outil avec un ensemble de broches (40) et un support de pièce (60), dans lequel l'ensemble de broches (40) présente au moins une broche porte-outil (41) servant à recevoir un outil d'usinage (44), dans lequel le support de pièce (60) présente au moins deux zones de maintien de pièce (65A, 65B) avec respectivement au moins un porte-pièce (62) servant à maintenir une pièce (W), dans lequel le support de pièce (60) et l'au moins une broche porte-outil (41) peuvent être ajustés les uns par rapport aux autres aux fins de l'usinage d'au moins une pièce (W) maintenue au niveau du support de pièce (60) à l'aide de l'outil d'usinage (44) le long d'un axe d'usinage (Z1) en particulier horizontal, dans lequel la machine-outil (10) présente un dispositif de changement de pièce (300) servant à charger le support de pièce (60) en pièces (W) et à décharger le support de pièce (60), et dans lequel la machine-outil (10) présente un dispositif d'ajustement (78) servant à ajuster les zones de maintien de pièce (65A, 65B) du support de pièce (60) entre une position d'usinage (285) tournée vers l'ensemble de broches (40), servant à usiner au moins une pièce (W) maintenue au niveau de la zone de maintien de pièce (65A, 65B) respective et une position de changement de pièce (286) tournée vers le dispositif de changement de pièce (300), servant à changer des pièces (W) par le dispositif de changement de pièce (300), **caractérisé par** :
- le pilotage de la machine-outil de telle manière que le dispositif de changement de pièce remplace dans le même temps pendant un usinage de pièces (W) maintenues au niveau d'une zone de maintien de pièce (65A, 65B) du support de pièce (60), des pièces (W) maintenues par l'ensemble de broches (40) lors d'un premier type d'usinage, au niveau de l'autre zone de maintien de pièce (65A, 65B) du support de pièce (60) et ne dispose aucune pièce (W) au niveau du support de pièce (60) ou n'en retire aucune du support de pièce (60) pendant un usinage de pièces (W) maintenues au niveau d'une zone de maintien de pièce (65A, 65B) lors d'un deuxième type d'usinage, où l'ensemble de broches (40) usine une pièce (W) respective avec une exigence plus élevée par rapport au premier type d'usinage au niveau d'une position de repos du support de pièce (60).

15. Procédé selon la revendication 14, **caractérisé en ce que** le dispositif de changement de pièce (300) est déplacé pendant l'usinage des pièces (W) lors du deuxième type d'usinage à l'écart du support de pièce (60), en particulier met en oeuvre des opérations de manutention servant à recevoir ou à déposer des pièces (W).
